# EUROPEAN PATENT APPLICATION

(11) **EP 4 472 304 A1**
(43) Date of publication of application: **04.12.2024**
(21) Application number: 23777674.5
(22) Date of filing: 15.02.2023
(51) Int. Cl.: H04W 60/00

(54) **COMMUNICATION METHOD, TERMINAL DEVICE, AND CORE NETWORK DEVICE**

(30) Priority: 28.03.2022 CN 202210329805
(71) Applicant: Huawei Technologies Co., Ltd., Shenzhen, Guangdong 518129 (CN)
(72) Inventor: WANG, Yaxin, Shenzhen, Guangdong 518129 (CN); ZHU, Fangyuan, Shenzhen, Guangdong 518129 (CN); SUN, Haiyang, Shenzhen, Guangdong 518129 (CN)
(74) Representative: Goddar, Heinz J.
(86) International application number: PCT/CN2023/076228
(87) International publication number: WO 2023/185295

(57) **Abstract**

This application provides a communication method, a terminal device, and a core network device. The method includes: A terminal device in a first TA sends a first registration request message to a core network device. The terminal device receives a registration accept message from the core network device, where the registration accept message includes information about a rejected slice, information about a first registration area RA, and first indication information, the first indication information indicates that a second TA supports a first slice, the second TA belongs to the first RA, and the first slice belongs to the rejected slice. When the terminal device moves from the first TA to the second TA, the terminal device sends a second registration request message to the core network device based on the first indication information, where the second registration request message includes information about the first slice. A requirement that the terminal device performs communication by using a network slice can be better met in this application.

## Description

This application claims priority to Chinese Patent Application No. 202210329805.5, filed with the China National Intellectual Property Administration on March 28, 2022 and entitled "COMMUNICATION METHOD, TERMINAL DEVICE, AND CORE NETWORK DEVICE", which is incorporated herein by reference in its entirety.

### TECHNICAL FIELD

This application relates to the field of communication technologies, and in particular, to a communication method, a terminal device, and a core network device.

### BACKGROUND

The concept of network slice is introduced into a 5th generation (5th generation, 5G) communication system. Using the network slicing technology can divide one physical network into a plurality of virtual networks, where a virtual network is considered as a "network slice", and network slices are mutually independent. Different sessions in one terminal device may need respective network slices corresponding to the sessions for service provisioning.

In an actual application, the terminal device includes a requested network slice in a request to register with a network, and obtains an allowed network slice and a registration area from a network side after successfully registering with the network. The terminal device can access the allowed network slice in any tracking area in the registration area, and use a service provided by the allowed network slice. However, for another slice (namely, a rejected network slice) that is not included in the allowed network slice and that is in the requested network slice, in the current registration area, even if the terminal device is in a tracking area that supports the rejected network slice, the terminal device is not allowed to use the rejected network slice. This greatly limits a quantity or types of network slices that can be used by the terminal device in a current network coverage range, and also limits types of PDU sessions that can be established by the terminal device. Consequently, a requirement that the terminal device performs communication by using the network slice cannot be met.

In this case, how to better meet the requirement that the terminal device performs communication by using the network slice becomes a technical problem to be resolved.

### SUMMARY

Embodiments of this application provide a wireless communication method, a terminal device, and a core network device, to better meet a requirement that the terminal device performs communication by using a network slice.

According to a first aspect, a communication method is provided, and includes:

A terminal device in a first tracking area TA sends a first registration request message to a core network device.

The terminal device receives a registration accept message from the core network device, where the registration accept message includes information about a rejected slice, information about a first registration area RA, and first indication information, the first indication information indicates that a second TA supports a first slice, the second TA belongs to the first RA, and the first slice belongs to the rejected slice.

When the terminal device moves from the first TA to the second TA, the terminal device sends a second registration request message to the core network device based on the first indication information, where the second registration request message includes information about the first slice.

When the terminal device moves from the first TA to the second TA, and the terminal device determines, based on a current service requirement (for example, a use requirement of an APP), that the first slice needs to be accessed to establish a PDU session, the terminal device can learn, based on an indication of the first indication information, that the second TA in which the terminal device is currently located supports the first slice. Because the first slice is a slice that is rejected in a current RA (first RA), the terminal device automatically triggers a registration procedure, and sends a registration request message (that is, the second registration request message) to an AMF again, where a requested slice carried in the second registration request message includes information about the first slice. After being approved by the AMF, the terminal device may access the first slice to perform communication.

According to the communication method provided in this embodiment of this application, the registration accept message further carries the first indication information, and the terminal device can learn of, based on the first indication information, a TA in which a specific rejected slice is available. For example, the terminal can learn, based on the first indication information, that the rejected first slice is actually available in the second TA. In this way, after moving to the second TA, if the terminal device still wants to use the first slice to perform network communication (for example, the establishment of the PDU session), the terminal device may initiate a registration request again, to request to access the first slice. Based on the foregoing setting, a quantity or types of network slices that can be used by the terminal device in a current wireless network coverage range can be increased, and types of PDU sessions that can be established by the terminal device are also increased, so that a requirement that the terminal device performs communication by using the network slice is met to a greater extent, thereby improving user experience.

With reference to the first aspect, in some implementations of the first aspect, the first indication information includes an identifier of the second TA and an identifier of the first slice.

With reference to the first aspect, in some implementations of the first aspect, the first indication information includes support information of a plurality of TAs for the rejected slice, the support information indicates that each of the plurality of TAs supports at least one slice in the rejected slice, or indicates a slice that is in the rejected slice and that is supported by each of the plurality of TAs, each of the plurality of TAs belongs to the first RA, and the plurality of TAs include the second TA.

An advantage of the foregoing setting is that because an information amount of the first indication information increases, the terminal device can learn, based on the first indication information, that a plurality of rejected slices may be available in the second TA. In this way, after moving to the second TA, if the terminal device wants to use at least one of the plurality of rejected slices to perform communication, the terminal device may initiate a registration request again, to request to access a corresponding slice. Therefore, the quantity or types of network slices that can be used by the terminal device in the current wireless network coverage range can be increased to a greater extent, so that the requirement that the terminal device performs communication by using the network slice is met to the greater extent, thereby further improving user experience.

With reference to the first aspect, in some implementations of the first aspect, before that the terminal device receives a registration accept message from the core network device, the method further includes: The terminal device sends first capability indication information to the core network device, where the first capability indication information indicates that the terminal device has a capability of receiving the first indication information.

That protocol releases executed (supported) by terminal devices may be inconsistent is taken into account. For example, some terminals execute a protocol of a higher release, some terminals execute a protocol of a lower release, and protocols of some releases may not support the terminal in receiving the first indication information. Therefore, to avoid problems such as a receiving error and unrecognizable receiving, the method provided in this embodiment of this application further specifies that the terminal device sends the first capability indication information to the AMF in advance, to indicate whether the terminal device has the capability of receiving the first indication information. When the AMF determines that the terminal device has the capability of receiving the first indication information, the registration accept message sent by the AMF to the terminal device carries the first indication information.

Optionally, the first capability indication information may be explicitly (directly) indicated. For example, as protocol- or system-specified, the first capability indication information is a string of specific codes or one bit of 0 or 1, or is distinguished by using NULL and non-NULL. Alternatively, the first capability indication information may be implicitly (indirectly) indicated. This is not limited in this application.

For example, the first capability indication information may include one bit of 1 to indicate that the terminal device has the capability of receiving the first indication information, and use one bit of 0 to indicate that the terminal device has no capability of receiving the first indication information.

With reference to the first aspect, in some implementations of the first aspect, the first capability indication information is carried in the first registration request message.

Optionally, the first capability indication information may alternatively be carried in another message in a conventional technology, or the terminal device may separately send the first capability indication information to the AMF. This is not limited in this application.

According to a second aspect, a communication method is provided, and includes: A terminal device in a first tracking area TA sends a first registration request message to a core network device.

The terminal device receives a registration accept message from the core network device, where the registration accept message includes information about a rejected slice, information about a first registration area RA, and first indication information, the first indication information indicates that the terminal device is allowed to initiate, in a second TA, a connection request for any slice in the rejected slice, and the rejected slice includes a first slice.

When the terminal device moves from the first TA to the second TA, the terminal device sends a second registration request message to the core network device based on the first indication information, where the second registration request message includes information about the first slice.

According to the method provided in this embodiment of this application, the registration accept message further carries first indication information, and the first indication information only indicates, to the terminal device, that the second TA may support one or more slices in the rejected slice, but does not explicitly indicate a specific slice or specific slices supported by the second TA. After moving to the second TA, if the terminal device still wants to use the first slice to perform network communication (for example, establishment of a PDU session), the terminal device automatically triggers a registration procedure, and sends a registration request message (that is, the second registration request message) to an AMF again, where a requested slice carried in the second registration request message includes information about the first slice. After being approved by the AMF, the terminal device may access the first slice to perform communication. Based on the foregoing setting, a quantity or types of network slices that can be used by the terminal device in a current wireless network coverage range can be increased, and types of PDU sessions that can be established by the terminal device are also increased, so that a requirement that the terminal device performs communication by using the network slice is met to a greater extent, thereby improving user experience.

In addition, compared with the foregoing embodiment, the method provided in this embodiment does not disclose support information of the second TA for the rejected slice, so that it can be ensured that slice deployment information of an operator is not disclosed to the terminal device, thereby achieving higher security performance. Certainly, when the terminal device initiates, in the second TA, a connection request for the first slice by using the second registration request message, the connection request may be rejected because the second TA does not support the first slice.

With reference to the second aspect, in some implementations of the second aspect, the first indication information includes an identifier of the second TA.

With reference to the second aspect, in some implementations of the second aspect, the first indication information includes a TA set, the TA set includes an identifier of a TA in which the terminal device is allowed to initiate the connection request for any slice in the rejected slice, and the TA set includes the identifier of the second TA.

With reference to the second aspect, in some implementations of the second aspect, before that the terminal device receives a registration accept message from the core network device, the method further includes: The terminal device sends first capability indication information to the core network device, where the first capability indication information indicates that the terminal device has a capability of receiving the first indication information.

With reference to the second aspect, in some implementations of the second aspect, the first capability indication information is carried in the first registration request message.

According to a third aspect, a communication method is provided, and includes: A terminal device in a first tracking area TA sends a first registration request message to a core network device.

The terminal device receives a registration accept message from the core network device, where the registration accept message includes information about a rejected slice, information about a first registration area RA, and first indication information, and the first indication information indicates that there is a mapping relationship between a first slice and a first network slice access stratum group NSASG.

The terminal device receives information about the first NSASG via a broadcast message of a second TA in the first RA.

The terminal device camps on the second TA, and sends a second registration request message to the core network device based on the first indication information, where the second registration request message includes information about the first slice.

According to the method provided in this embodiment of this application, the registration accept message further carries first indication information, and the terminal device can learn of, based on the first indication information, an NSASG corresponding to a TA in which a specific rejected slice is available. For example, the terminal can learn, based on the first indication information, that the rejected first slice is actually available in the second TA corresponding to the first NSASG. When the terminal device receives the information about the first NSASG via the broadcast message of the second TA, the terminal can learn that the second TA can support the first slice. In this case, if the terminal device determines that the terminal device still wants to use the first slice to perform network communication (for example, establishment of a PDU session), the terminal device may camp on the second TA, and initiate a registration request again, to request to access the first slice. Based on the foregoing setting, a quantity or types of network slices that can be used by the terminal device in a current wireless network coverage range can be increased, and types of PDU sessions that can be established by the terminal device are also increased, so that a requirement that the terminal device performs communication by using the network slice is met to a greater extent, thereby improving user experience.

In addition, in the method, a specific TA slice deployment situation is not disclosed to the terminal device, and only a mapping relationship between the NSASG and the rejected slice is provided. When NSASG broadcast information is obtained through detection, a request for the rejected slice may be triggered, and there is no need to be handed over to a corresponding TA for triggering. For example, in this case, the terminal device may be located only at an edge of the TA. This is more flexible and is applicable to more scenarios.

With reference to the third aspect, in some implementations of the third aspect, the first indication information includes an identifier of the first slice and an identifier of the first NSASG.

With reference to the third aspect, in some implementations of the third aspect, the first indication information indicates mapping relationships between a plurality of slices in the rejected slice and the NSASG, and the first slice is any one of the plurality of slices.

With reference to the third aspect, in some implementations of the third aspect, before that the terminal device receives a registration accept message from the core network device, the method further includes: The terminal device sends first capability indication information to the core network device, where the first capability indication information indicates that the terminal device has a capability of receiving the first indication information.

With reference to the third aspect, in some implementations of the third aspect, the first capability indication information is carried in the first registration request message.

According to a fourth aspect, a communication method is provided, and includes:

A core network device receives a first registration request message from a terminal device.

The core network device sends a registration accept message to the terminal device, where the registration accept message includes information about a rejected slice, information about a first registration area RA, and first indication information.

The first indication information indicates that a second TA supports a first slice, the second TA belongs to the first RA, and the first slice belongs to the rejected slice;
the first indication information indicates that the terminal device is allowed to initiate, in a second TA, a connection request for any slice in the rejected slice, and the rejected slice includes a first slice; or
the first indication information indicates that there is a mapping relationship between a first slice and a first network slice access stratum group NSASG.

The core network device receives a second registration request message from the terminal device, where the second registration request message includes information about the first slice.

With reference to the fourth aspect, in some implementations of the fourth aspect, the first indication information includes an identifier of the second TA and an identifier of the first slice, the first indication information includes an identifier of the second TA, or the first indication information includes an identifier of the first slice and an identifier of the first NSASG.

With reference to the fourth aspect, in some implementations of the fourth aspect, the first indication information includes support information of a plurality of TAs for the rejected slice, the support information indicates that each of the plurality of TAs supports at least one slice in the rejected slice, or indicates a slice that is in the rejected slice and that is supported by each of the plurality of TAs, each of the plurality of TAs belongs to the first RA, and the plurality of TAs include the second TA;
the first indication information includes a TA set, the TA set includes an identifier of a TA in which the terminal device is allowed to initiate the connection request for any slice in the rejected slice, and the TA set includes the identifier of the second TA; or
the first indication information indicates mapping relationships between a plurality of slices in the rejected slice and an NSASG, and the first slice is any one of the plurality of slices.

With reference to the fourth aspect, in some implementations of the fourth aspect, the method further includes: The core network device receives first capability indication information from the terminal device, where the first capability indication information indicates that the terminal device has a capability of receiving the first indication information. That the core network device sends a registration accept message to the terminal device includes: The core network device sends the registration accept message to the terminal device based on the first capability indication information.

With reference to the fourth aspect, in some implementations of the fourth aspect, the first capability indication information is carried in the first registration request message.

With reference to the fourth aspect, in some implementations of the fourth aspect, before that the core network device sends a registration accept message to the terminal device, the method further includes:

The core network device determines that the second TA belongs to the first RA and supports the at least one slice in the rejected slice.

According to a fifth aspect, a communication method is provided, and includes:

A core network device receives a first registration request message from a terminal device.

The core network device obtains first capability indication information, where the first capability indication information indicates whether the terminal device has a capability of receiving first indication information.

When the first capability indication information indicates that the terminal device has the capability of receiving the first indication information, the core network device sends a registration accept message to the terminal device, where the registration accept message includes information about a rejected slice, information about a first registration area RA, and the first indication information. The first indication information indicates that a second tracking area TA supports a first slice, the second TA belongs to the first RA, and the first slice belongs to the rejected slice;
the first indication information indicates that the terminal device is allowed to initiate, in a second TA, a connection request for any slice in the rejected slice, and the rejected slice includes a first slice; or
the first indication information indicates that there is a mapping relationship between a first slice and a first network slice access stratum group NSASG.

When the first capability indication information indicates that the terminal device has no capability of receiving the first indication information, the core network device sends a registration accept message to the terminal device, where the registration accept message includes information about a rejected slice and information about a second RA, and no TA in the second RA supports the rejected slice.

With reference to the fifth aspect, in some implementations of the fifth aspect, the first indication information includes an identifier of the second TA and an identifier of the first slice;
the first indication information includes an identifier of the second TA; or
the first indication information includes an identifier of the first slice and an identifier of the first NSASG.

With reference to the fifth aspect, in some implementations of the fifth aspect, the first indication information includes support information of a plurality of TAs for the rejected slice, the support information indicates that each of the plurality of TAs supports at least one slice in the rejected slice, or indicates a slice that is in the rejected slice and that is supported by each of the plurality of TAs, each of the plurality of TAs belongs to the first RA, and the plurality of TAs include the second TA;
the first indication information includes a TA set, the TA set includes an identifier of a TA in which the terminal device is allowed to initiate the connection request for any slice in the rejected slice, and the TA set includes the identifier of the second TA; or
the first indication information indicates mapping relationships between a plurality of slices in the rejected slice and an NSASG, and the first slice is any one of the plurality of slices.

With reference to the fifth aspect, in some implementations of the fifth aspect, the first capability indication information is carried in the first registration request message.

According to a sixth aspect, a terminal device is provided, and includes:
a sending module, configured to send a first registration request message to a core network device when the terminal device is in a first tracking area TA; and
a receiving module, configured to receive a registration accept message from the core network device, where the registration accept message includes information about a rejected slice, information about a first registration area RA, and first indication information, the first indication information indicates that a second TA supports a first slice, the second TA belongs to the first RA, and the first slice belongs to the rejected slice.

The sending module is further configured to send a second registration request message to the core network device based on the first indication information when the terminal device moves from the first TA to the second TA, where the second registration request message includes information about the first slice.

With reference to the sixth aspect, in some implementations of the sixth aspect, the first indication information includes an identifier of the second TA and an identifier of the first slice.

With reference to the sixth aspect, in some implementations of the sixth aspect, the first indication information includes support information of a plurality of TAs for the rejected slice, each of the plurality of TAs belongs to the first RA and supports at least one slice in the rejected slice, and the second TA is any one of the plurality of TAs.

With reference to the sixth aspect, in some implementations of the sixth aspect, before the receiving module receives the registration accept message from the core network device, the sending module is further configured to send first capability indication information to the core network device, where the first capability indication information indicates that the terminal device has a capability of receiving the first indication information.

With reference to the sixth aspect, in some implementations of the sixth aspect, the first capability indication information is carried in the first registration request message.

According to a seventh aspect, a terminal device is provided, and includes:
a sending module, configured to send a first registration request message to a core network device when the terminal device is in a first tracking area TA; and
a receiving module, configured to receive a registration accept message from the core network device, where the registration accept message includes information about a rejected slice, information about a first registration area RA, and first indication information, the first indication information indicates that the terminal device is allowed to initiate, in a second TA, a connection request for any slice in the rejected slice, the second TA belongs to the first RA and supports at least one slice in the rejected slice, and the rejected slice includes a first slice.

The sending module is further configured to send a second registration request message to the core network device based on the first indication information when the terminal device moves from the first TA to the second TA, where the second registration request message includes information about the first slice.

With reference to the seventh aspect, in some implementations of the seventh aspect, the first indication information includes an identifier of the second TA.

With reference to the seventh aspect, in some implementations of the seventh aspect, the first indication information indicates that the terminal device is allowed to initiate, in any TA in a TA set, the connection request for any slice in the rejected slice, each TA in the TA set supports the at least one slice in the rejected slice, and the second TA is any one in the TA set.

With reference to the seventh aspect, in some implementations of the seventh aspect, before the receiving module receives the registration accept message from the core network device, the sending module is further configured to send first capability indication information to the core network device, where the first capability indication information indicates that the terminal device has a capability of receiving the first indication information.

With reference to the seventh aspect, in some implementations of the seventh aspect, the first capability indication information is carried in the first registration request message.

According to an eighth aspect, a terminal device is provided, and includes:
a sending module, configured to send a first registration request message to a core network device when the terminal device is in a first tracking area TA; and
a receiving module, configured to receive a registration accept message from the core network device, where the registration accept message includes information about a rejected slice, information about a first registration area RA, and first indication information, the first indication information indicates that there is a mapping relationship between a first slice and a first network slice access stratum group NSASG, the first slice belongs to the rejected slice, and the first RA includes a second TA.

The receiving module is further configured to receive information about the first NSASG via a broadcast message of the second TA.

The sending module is further configured to send a second registration request message to the core network device when the terminal device camps on the second TA based on the first indication information, where the second registration request message includes information about the first slice.

With reference to the eighth aspect, in some implementations of the eighth aspect, the first indication information includes an identifier of the first slice and an identifier of the first NSASG.

With reference to the eighth aspect, in some implementations of the eighth aspect, the first indication information indicates mapping relationships between a plurality of slices in the rejected slice and an NSASG, and the first slice is any one of the plurality of slices.

With reference to the eighth aspect, in some implementations of the eighth aspect, before the receiving module receives the registration accept message from the core network device, the sending module is further configured to send first capability indication information to the core network device, where the first capability indication information indicates that the terminal device has a capability of receiving the first indication information.

With reference to the eighth aspect, in some implementations of the eighth aspect, the first capability indication information is carried in the first registration request message.

According to a ninth aspect, a core network device is provided, and includes:
a receiving module, configured to receive a first registration request message from a terminal device; and
a sending module, configured to send a registration accept message to the terminal device, where the registration accept message includes information about a rejected slice, information about a first registration area RA, and first indication information.

The first indication information indicates that a second TA supports a first slice, the second TA belongs to the first RA, and the first slice belongs to the rejected slice;
the first indication information indicates that the terminal device is allowed to initiate, in a second TA, a connection request for any slice in the rejected slice, the second TA belongs to the first RA and supports at least one slice in the rejected slice, and the rejected slice includes a first slice; or
the first indication information indicates that there is a mapping relationship between a first slice and a first network slice access stratum group NSASG, the first slice belongs to the rejected slice, and the first RA includes a second TA.

The receiving module is further configured to receive a second registration request message from the terminal device, where the second registration request message includes information about the first slice.

With reference to the ninth aspect, in some implementations of the ninth aspect, the first indication information includes an identifier of the second TA and an identifier of the first slice, the first indication information includes an identifier of the second TA, or the first indication information includes an identifier of the first slice and an identifier of the first NSASG.

With reference to the ninth aspect, in some implementations of the ninth aspect, the first indication information includes support information of a plurality of TAs for the rejected slice, each of the plurality of TAs belongs to the first RA and supports the at least one slice in the rejected slice, and the second TA is any one of the plurality of TAs;
the first indication information indicates that the terminal device is allowed to initiate, in any TA in a TA set, the connection request for any slice in the rejected slice, each TA in the TA set supports the at least one slice in the rejected slice, and the second TA is any one in the TA set; or
the first indication information indicates mapping relationships between a plurality of slices in the rejected slice and an NSASG, and the first slice is any one of the plurality of slices.

With reference to the ninth aspect, in some implementations of the ninth aspect, the receiving module is further configured to receive first capability indication information from the terminal device, where the first capability indication information indicates that the terminal device has a capability of receiving the first indication information.

The sending module is specifically configured to send the registration accept message to the terminal device based on the first capability indication information.

With reference to the ninth aspect, in some implementations of the ninth aspect, the first capability indication information is carried in the first registration request message.

According to a tenth aspect, a core network device is provided, and includes:
a receiving module, configured to receive a first registration request message from a terminal device, where the first registration request message includes first capability indication information, and the first capability indication information indicates whether the terminal device has a capability of receiving first indication information; and
a sending module, configured to send a registration accept message to the terminal device when the first capability indication information indicates that the terminal device has the capability of receiving the first indication information, where the registration accept message includes information about a rejected slice, information about a first registration area RA, and the first indication information. The first indication information indicates that a second tracking area TA supports a first slice, the second TA belongs to the first RA, and the first slice belongs to the rejected slice;
the first indication information indicates that the terminal device is allowed to initiate, in a second TA, a connection request for any slice in the rejected slice, the second TA belongs to the first RA and supports at least one slice in the rejected slice, and the rejected slice includes a first slice; or
the first indication information indicates that there is a mapping relationship between a first slice and a first network slice access stratum group NSASG, the first slice belongs to the rejected slice, and the first RA includes a second TA.

When the first capability indication information indicates that the terminal device has no capability of receiving the first indication information, the sending module is configured to send a registration accept message to the terminal device, where the registration accept message includes information about a rejected slice and information about a second RA, and no TA in the second RA supports the rejected slice.

With reference to the tenth aspect, in some implementations of the tenth aspect, the first indication information includes an identifier of the second TA and an identifier of the first slice, the first indication information includes an identifier of the second TA, or the first indication information includes an identifier of the first slice and an identifier of the first NSASG.

With reference to the tenth aspect, in some implementations of the tenth aspect, the first indication information includes support information of a plurality of TAs for the rejected slice, each of the plurality of TAs belongs to the first RA and supports the at least one slice in the rejected slice, and the second TA is any one of the plurality of TAs;
the first indication information indicates that the terminal device is allowed to initiate, in any TA in a TA set, the connection request for any slice in the rejected slice, each TA in the TA set supports the at least one slice in the rejected slice, and the second TA is any one in the TA set; or
the first indication information indicates mapping relationships between a plurality of slices in the rejected slice and an NSASG, and the first slice is any one of the plurality of slices.

According to an eleventh aspect, an embodiment of this application provides a communication apparatus. The communication apparatus may be a terminal device or a chip disposed in the terminal device. The communication apparatus includes a processor, a memory, and a transceiver.

The transceiver is configured to receive and send a message.

The memory is configured to store instructions.

The processor is configured to execute the instructions stored in the memory. When the processor executes the instructions stored in the memory, the communication apparatus is enabled to perform the method performed in any implementation of the first aspect to the third aspect.

According to a twelfth aspect, an embodiment of this application provides a communication apparatus. The communication apparatus may be a core network device or a chip disposed in the core network device. The communication apparatus includes a processor, a memory, and a transceiver.

The transceiver is configured to receive and send a message.

The memory is configured to store instructions.

The processor is configured to execute the instructions stored in the memory. When the processor executes the instructions stored in the memory, the communication apparatus is enabled to perform the method performed in any implementation of the fourth aspect and the fifth aspect.

According to a thirteenth aspect, a terminal device is provided, and includes at least one processor. The at least one processor is configured to: be coupled to a memory, and read and execute instructions in the memory, to implement the method performed in any implementation of the first aspect to the third aspect.

Optionally, the terminal device further includes the memory.

According to a fourteenth aspect, a core network device is provided, and includes at least one processor. The at least one processor is configured to: be coupled to a memory, and read and execute instructions in the memory, to implement the method performed in any implementation of the fourth aspect and the fifth aspect.

Optionally, the core network device further includes the memory.

According to a fifteenth aspect, a computer program product is provided. The computer program product includes computer program code. When the computer program code is run on a computer, the computer is enabled to perform the method performed in any implementation of the first aspect to the fifth aspect.

It should be noted that all or some of the computer program code may be stored in a first storage medium. The first storage medium may be encapsulated with a processor, or may be encapsulated separately from the processor. This is not specifically limited in this application.

According to a sixteenth aspect, a computer-readable medium is provided. The computer-readable medium stores program code. When the computer program code is run on a computer, the computer is enabled to perform the method performed in any implementation of the first aspect to the fifth aspect.

According to a seventeenth aspect, a chip system is provided, and includes a processor, configured to invoke a computer program from a memory and run the computer program, to enable a communication device installed with the chip system to perform the method performed in any implementation of the first aspect to the fifth aspect.

According to an eighteenth aspect, a communication system is provided. The communication system includes at least one of the terminal devices provided in the first aspect to the third aspect and the core network device provided in the fifth aspect or the fourth aspect.

### BRIEF DESCRIPTION OF DRAWINGS

FIG. 1 is a schematic diagram of a network architecture of a 5G communication system;
FIG. 2 is a schematic diagram of an example of a network slice;
FIG. 3 is a schematic diagram of a slice selection procedure of a terminal device in a registration process;
FIG. 4 is a schematic diagram of a possible application scenario according to this application;
FIG. 5 is a schematic flowchart of an example of a communication method according to an embodiment of this application;
FIG. 6 is a schematic flowchart of another example of a communication method according to an embodiment of this application;
FIG. 7 is a schematic flowchart of still another example of a communication method according to an embodiment of this application;
FIG. 8 is a schematic flowchart of still another example of a communication method according to an embodiment of this application;
FIG. 9 is a schematic flowchart of still another example of a communication method according to an embodiment of this application;
FIG. 10 is a schematic block diagram of a terminal device according to an embodiment of this application;
FIG. 11 is a schematic diagram of a structure of a terminal device according to an embodiment of this application;
FIG. 12 is a schematic block diagram of a core network device according to an embodiment of this application; and
FIG. 13 is a schematic diagram of a structure of a core network device according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The technical solutions in embodiments of this application may be applied to various communication systems such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, a new radio access technology (new radio access technology, NR), and a future communication system (for example, a 6th generation (6th generation, 6G) communication system).

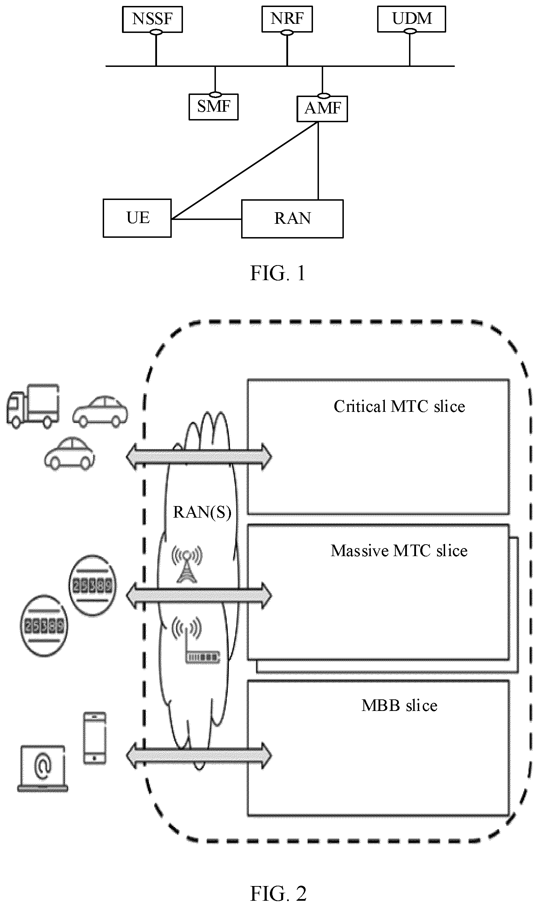

In this application, the 5G communication system is used as an example for description. FIG. 1 is a schematic diagram of a network architecture of a 5G communication system. The figure shows some network elements in the 5G architecture. The network architecture includes a terminal device, an access network device, an access management network element, a network slice selection network element, a data management network element, and a network repository network element. The following briefly describes a function of each device or network element.

The terminal device in this application is a device with a wireless transceiver function, and may also be referred to as user equipment (user equipment, UE). The terminal device may be deployed on land, including an indoor or outdoor device, or a handheld or vehicle-mounted device, may be deployed on a water surface (for example, on a ship), or may be deployed in the air (for example, on an airplane, a balloon, or a satellite). The terminal device may be a mobile phone (mobile phone), a pad (pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

The access network device in this application is a device that provides a wireless communication function for the terminal, and may also be referred to as a radio access network (radio access network, RAN) device. The access network device includes but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), a transmitting and receiving point (transmitting and receiving point, TRP), a transmission point (transmission point, TP), a mobile switching center, and the like.

The access management network element is a control plane network element provided by an operator network, and is responsible for access control and mobility management when the terminal device accesses the operator network, for example, including functions such as mobility state management, allocation of a temporary user identifier, and user authentication. In the 5G communication system, the access management network element may be an access and mobility management function (access and mobility management function, AMF) network element. In the future communication system, for example, 6G, the access management network element may still be the AMF network element, or may have another name. This is not limited in this application.

The network slice selection network element may be configured to select a proper network slice for a service of the terminal. In the 5G communication system, the network slice selection network element may be a network slice selection function (network slice selection function, NSSF) network element. In the future communication system, for example, 6G, the network slice selection function may still be the NSSF network element, or may have another name. This is not limited in this application.

The data management network element is configured for generation of authentication credentials, user identification handling (for example, storage and management of a permanent user identifier), access control, subscription data management, and the like. In the 5G communication system, the data management network element may be a unified data management (unified data management, UDM) network element. In the future communication system, for example, 6G, the data management network element may still be the UDM network element, or may have another name. This is not limited in this application.

The network repository network element may be configured to provide a network element discovery function and provide network element information corresponding to a network element type based on a request of another network element. The network repository network element may further be configured to provide network element management services such as network element registration, update, and deregistration and network element status subscription and push. In the 5G communication system, the network repository network element may be a network registration function (network repository function, NRF) network element. In the future communication system, for example, 6G, the network repository network element may still be the NRF network element, or may have another name. This is not limited in this application.

The session management function (session management function, SMF) network element is mainly configured for session management, UE Internet protocol (Internet Protocol, IP) address allocation and management, selection of a manageable user plane function, policy control, a termination point of a charging functional interface, downlink data notification, and the like. In embodiments of this application, the session management function network element may be configured to implement a function of a session management network element.

The terminal device in embodiments of this application may be the UE in FIG. 1, and the access network device in embodiments of this application may be the RAN in FIG. 1. The access management network element in embodiments of this application may be the AMF network element shown in FIG. 1, or may be a network element that has a function of the AMF network element in the future communication system. The network slice selection network element in embodiments of this application may be the NSSF network element shown in FIG. 1, or may be a network element that has a function of the NSSF network element in the future communication system. The data management network element in embodiments of this application may be the UDM network element shown in FIG. 1, or may be a network element that has a function of the UDM network element in the future communication system. The network repository network element in embodiments of this application may be the NRF network element shown in FIG. 1, or may be a network element that has a function of the NRF network element in the future communication system. The session management function network element in embodiments of this application may be the SMF network element shown in FIG. 1, or may be a network element that has a function of the SMF network element in the future communication system.

For ease of description, this application is subsequently described by using an example in which the access management network element is the AMF network element, the network slice selection network element is the NSSF network element, the data management network element is the UDM network element, the network repository network element is the NRF network element, and the session management function network element is the SMF. Further, the AMF network element is referred to as an AMF for short, the NSSF network element is referred to as an NSSF for short, the UDM network element is referred to as a UDM for short, the NRF network element is referred to as an NRF for short, the SMF network element is referred to as an SMF for short, the terminal device is referred to as UE for short, and the access network device is referred to as a RAN for short. To be specific, the AMF described subsequently in this application may be replaced with the access management network element, the NSSF may be replaced with the network slice selection network element, the UDM may be replaced with the data management network element, the NRF may be replaced with the network repository network element, the SMF may be replaced with the session management function network element, the RAN may be replaced with the access network device, and the UE may be replaced with the terminal device.

It should be noted that in embodiments of this application, a "network slice" and a "slice" are a same concept, and mean same content. One of the descriptions is used in different places, and the two descriptions may be interchangeable.

Embodiments of this application may be applied to various communication systems that support the network slice, for example, the 5G communication system. The terms "system" and "network" may be interchanged with each other. The system architecture described in embodiments of this application is intended to describe the technical solutions in embodiments of this application more clearly, and does not constitute any limitation on the technical solutions provided in embodiments of this application. A person of ordinary skill in the art may learn that, with evolution of the network architecture, the technical solutions provided in embodiments of this application are also applicable to a similar technical problem.

The foregoing describes content such as some basic concepts and the 5G network architecture in embodiments of this application. The following continues to describe related content of embodiments of this application.

In a 5G era, hundreds of billions of internet-of-things devices access the network. Different types of application scenarios have different requirements on the network, and some even conflict with each other. If a single network is used to provide services for different types of application scenarios, a network architecture is extremely complex, and network management efficiency and resource utilization efficiency are low. Therefore, a network slicing technology is provided. In the 5G network slicing technology, network environments isolated from each other are provided for different application scenarios in a manner of virtualizing an independent logical network on a same network infrastructure, so that network functions and characteristics can be customized for the different application scenarios based on respective requirements, and quality of service (quality of service, QoS) requirements of different services can be effectively ensured. An objective of the 5G network slicing is to organically combine a terminal device, an access network resource, a core network resource, and a network operation, maintenance, and management system to provide, for different business scenarios or service types, complete networks that can be independently operated and maintained and isolated from each other.

FIG. 2 is a schematic diagram of a network slice. In a specific example, FIG. 2 includes three network slices: a critical (critical) machine type of communication (machine type of communication, MTC) slice, a massive (massive) MTC slice, and a mobile broadband (mobile broadband, MBB) slice. In FIG. 2, a terminal device corresponding to the critical MTC slice may include a vehicle or the like. A terminal device corresponding to the massive MTC slice may include some measurement meters such as an electricity meter or a gas meter. A terminal device corresponding to the MBB slice may include a mobile phone, a personal computer (personal computer, PC), or the like.

Various scenarios pose different requirements: charging, policy, security, mobility, and the like for a 3rd generation partnership project (3rd generation partnership project, 3GPP) ecosystem. The 3GPP emphasizes that network slices do not affect each other. For example, a large quantity of burst meter reading services should not affect a normal mobile broadband service. To meet diversified requirements and slice isolation, management, operation, and maintenance that are relatively independent between services are needed, and a customized service function and an analysis capability need to be provided. Instances of different service types are deployed on different network slices, and different instances of a same service type may also be deployed on different network slices.

When the network slice is deployed in a core network, a network slice selection process is triggered when a terminal device initially attaches to the network. The network slice selection process depends on one or more of parameters such as subscription data of a user, local configuration information, a roaming agreement, or a policy of an operator. In the network slice selection process, the foregoing parameters need to be comprehensively considered to select an optimal slice type for the terminal device.

When the terminal needs to access a network slice, the terminal may provide a requested (requested) network slice for the core network, so that the core network selects a network slice instance for the terminal. The network slice requested by the terminal may be represented by requested network slice selection assistance information (requested network slice selection assistance information, requested NSSAI). The requested NSSAI includes one or more pieces of single network slice selection assistance information (single network slice selection assistance information, S-NSSAI), that is, the NSSAI is a set of a group of pieces of S-NSSAI. Each piece of S-NSSAI identifies one network slice type. Alternatively, it may be understood as that the S-NSSAI identifies the network slice, or it may be understood as that the S-NSSAI is identification information of the network slice. In the descriptions of this application, "a plurality of" means two or more, for example, may be three, four, or five.

One network slice is identified by using the S-NSSAI, and the S-NSSAI includes a slice type/service type (slice/service type, SST) and a slice differentiator (slice differentiator, SD). The SST is for describing features of the slice in terms of a characteristic and a service, and indicates the feature and the service that the network is expected to provide. The SD may be used as supplementary information for the SST when the network slice instance (network slice instance, NSI) is selected. For example, when an SST indicates a plurality of NSIs, SDs may further differentiate these NSIs. To be specific, the SD is used as optional information to distinguish between different network slices with a same SST feature.

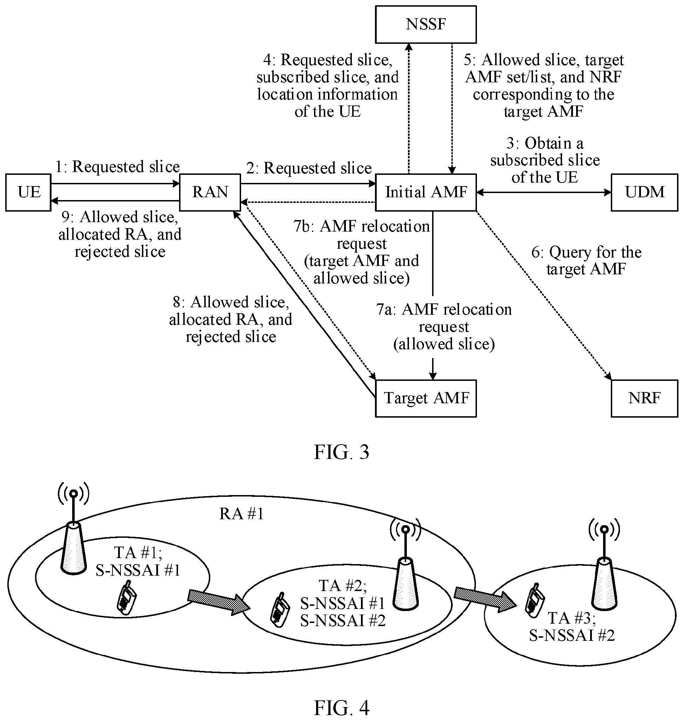

In a 5G network, when the terminal device needs to use a network service, the terminal device needs to first register with the network. FIG. 3 is a schematic diagram of a slice selection procedure of a terminal device in a registration process. As shown in FIG. 3, the terminal device performs a slice request during registration, and a core network device feeds back, to the terminal device, an allowed slice (allowed NSSAI) that can be used by the terminal device. Subsequently, when performing a service, the terminal device can select a slice only from the allowed slice to establish a packet data unit (packet data unit, PDU) session. A specific process is as follows.

Step 1: UE sends a registration request (registration request) message to a RAN, and the RAN receives the registration request message from the UE.

The registration request message carries a requested slice (requested NSSAI), and the requested slice is a network slice of a PDU session that the terminal device expects to establish. The requested slice indicates a network slice provided by the terminal device for a serving public land mobile network in a registration process. For example, the requested slice is a slice that is supported by the UE and that is determined by the UE during subscription. The requested slice includes one or more slices (S-NSSAI), and one piece of S-NSSAI may identify one network slice.

Step 2: The RAN sends the registration request to an initial (initial) AMF, and the initial AMF receives the registration request message from the RAN.

To be specific, the RAN forwards the registration request message to the initial AMF. The registration request message is, for example, an N1 message (message). The N1 message may include information such as an N1 parameter, a registration message, access information of the terminal device, PDU session information, and a context request of the UE.

Step 3: The initial AMF sends a request to a UDM to obtain subscription information of the UE, where the subscription information includes information such as subscription NSSAI of the UE.

Step 4: If the initial AMF cannot determine a slice allowed by the UE, the initial AMF requests slice selection from an NSSF, and sends the requested slice of the UE, a subscribed slice of the UE, and location information of the UE to the NSSF.

Step 5: The NSSF determines the slice allowed by the UE. In addition, if the AMF needs to be handed over, the NSSF further needs to determine a target (target) AMF. In this case, the NSSF sends information such as the allowed slice, a set/list of the target AMF, and an identifier (identification, ID) of an NRF corresponding to the target AMF to the initial AMF.

Herein, the allowed slice indicates a slice that can be used by the UE in all tracking areas (tracking areas, TAs) in a current registration area (registration area, RA). The allowed slice includes at least one slice included in the requested slice.

Correspondingly, the core network device may further maintain a network slice that rejects access of the UE. The network slice may be referred to as a rejected slice (rejected NSSAI), and may include one or more slices (S-NSSAI). A slice in the rejected slice may be a network slice that is not supported by a current network or a current TA. Currently, the rejected slice is usually determined based on the requested slice carried in the registration request of the UE. When the UE requests to access a network slice, if the current network or the current TA does not support the network slice, the network slice is added to a rejected slice list.

The TA is a basic unit of location management in a communication system, and includes one or more cells. The cell is an area covered by one radio access network device or a part of the area covered by the radio access network device. The TA may include cells included by a plurality of radio access network devices. When a terminal device in an idle state needs to be paged, paging is performed by using a paging message in a unit of the TA, and a paging message for one terminal device is sent in all cells in the TA. One cell belongs to only one TA.

One network slice may provide a service for one or more TAs, and one TA may support one or more network slices. The TA may be identified by using a tracking area identifier (tracking area identifier, TAI) or a tracking area code (tracking area code, TAC). The TAI includes a mobile country code (mobile country code, MCC), a mobile network code (mobile network code, MNC), and the TAC.

An RA includes one or more TAs. For example, when moving in different TAs in a same RA, the terminal device does not need to perform a mobility registration update. The mobility registration update needs to be performed only when the terminal device moves to a new TA and determines that the new TA does not belong to the RA.

Step 6: If the AMF needs to be handed over, the initial AMF queries the corresponding NRF for related information about the target AMF based on the NRF identifier sent by the NSSF.

Step 7a: The initial AMF sends an AMF relocation (relocation) request message to the target AMF, where the relocation request message is for requesting to relocate (update) the AMF for the UE. The AMF relocation request message carries indication information of the allowed slice.

As an optional step, as shown in FIG. 3, step 7a may be replaced with step 7b. In step 7b, the initial AMF may alternatively send the AMF relocation request message to the target AMF through the RAN. The AMF relocation request message also carries the indication information of the allowed slice.

Step 8: The target AMF sends a registration accept (registration accept) message to the RAN, and the RAN receives the registration accept message from the target AMF. The registration accept message is for notifying the UE that the registration request is accepted. The registration accept message includes related information such as the allowed slice, the RA allocated to the UE, and the rejected slice. For example, the target AMF sends the registration accept message to the RAN by using an N2 message.

After an AMF handover procedure is complete, the target AMF may allocate (allocate) the RA to the UE based on the allowed slice. The AMF may query for a status of a network slice supported by each of a plurality of surrounding TAs, and the AMF forms the RA of the UE by using a plurality of TAs that support the allowed slice.

A specific example is used for description. Table 1 shows support statuses of different TAs for the network slice. The NSSF determines that the allowed slice includes only a slice #1. In this case, the AMF may query for a status of a network slice supported by each of a plurality of surrounding TAs, and form an RA #1 by using three TAs (that is, a TA #1, a TA #2, and a TA #3) that support the slice #1. The RA #1 is a registration area allocated by the core network to the UE. However, because a TA #4 does not support the slice #1, the TA #4 cannot be allocated to the RA #1.

**Table 1**

| | |
|---|---|
| Allowed slice | Slice #1 |
| Slice supported by the TA #1 | Slice #1 |
| Slice supported by the TA #2 | Slice #1 and slice #2 |
| Slice supported by the TA #3 | Slice #1 and slice #3 |
| Slice supported by the TA #4 | Slice #2 |

Step 9: The RAN sends the registration accept message to the UE, and the UE receives the registration accept message from the RAN. To be specific, the RAN forwards the registration accept message to the UE.

It should be noted that usually, for the UE, the AMF may not need to be handed over. In this case, step 6 and step 7 (including step 7a and step 7b) may be omitted. In an alternative step of step 8, the initial AMF may send the registration accept message to the RAN, and the RAN forwards the registration accept message to the UE.

According to a latest protocol progress, the terminal device may initiate a registration procedure to the core network in the following five scenarios:
(1) First registration of the terminal device with a 5G network.
(2) Mobility registration update caused when the terminal device moves to a tracking area (tracking area, TA) outside an original registration area (registration area, RA).
(3) Update caused by a terminal device capability change.
(4) Periodic registration update of the terminal device in an inactive state.
(5) Emergency registration.

Based on the foregoing descriptions, the UE performs network slice selection only in the registration procedure, and the UE triggers the registration procedure only in the foregoing five cases. Therefore, the UE can perform allowed NSSAI slice selection only in the foregoing several scenarios.

FIG. 4 is a schematic diagram of a possible application scenario according to this application. According to a current protocol, as shown in FIG. 4, the following scenarios may exist.

A TA #1 supports a slice #1, and a TA #2 supports the slice #1 and a slice #2. Herein, that the TA #1 supports the slice #1 may be understood as that the slice #1 is available in the TA #1, and that the TA #2 supports the slice #1 and the slice #2 may be understood as that the slice #1 and the slice #2 are available in the TA #2. UE accesses a network in the TA #1 and performs a registration procedure. Slices requested by the UE are slice #1 and slice #2. However, because the TA #1 supports only the slice #1, an allowed slice is the slice #1, and a rejected slice is the slice #2. When a core network allocates an RA to the UE, because the TA #2 also supports the slice #1, both the TA #1 and the TA #2 fall into an RA #1, and the RA #1 is a registration area allocated by the core network to the UE. The RA #1 includes at least a plurality of TAs including the TA #1 and the TA #2.

The UE moves in the RA #1. When the UE moves from the TA #1 to a range of the TA #2, where the TA #2 also supports the slice #2, because in this case, the TA #2 falls into a range of the RA #1, and the UE is not out of the range of the RA #1 and does not re-initiate a registration procedure, the slice #2 is still not accessed. In addition, because the current slice #2 is a rejected slice, the UE does not request to establish a session of the slice #2. If the UE still wants to access the slice #2, the UE needs to move to a TA #3 that is outside the RA #1 and that supports the slice #2. In this case, the UE can re-initiate the registration procedure and attempt to access the slice #2.

In conclusion, when the requested slice includes a plurality of slices, and the allowed slice sent by the core network device includes a part of the slices in the requested slice, other parts of the slices included in the requested slice of the terminal device are not in the allowed slice. In this way, even if the terminal device is in a TA that supports use of the other part (that is, a rejected slice) of the slices, the terminal device is not allowed to use the other part of the slices. This greatly limits a quantity or types of network slices that can be used by the terminal device in a current network coverage range, and also limits types of PDU sessions that can be established by the terminal device. Consequently, a requirement that the terminal device performs communication by using the network slice cannot be met.

In this case, how to better meet the requirement that the terminal device performs communication by using the network slice becomes a technical problem to be resolved.

Based on the foregoing problem, embodiments of this application provide a communication method, a terminal device, and a core network device, to increase a quantity or types of network slices that can be used by the terminal device in a current network coverage range, and also increase a type of a PDU session that can be established by the terminal device, so that a requirement that the terminal device performs communication by using the network slice can be met to a greater extent, thereby improving user experience.

It may be understood that in embodiments of this application, the terminal device and/or the core network device (for example, an AMF) may perform some or all steps in embodiments of this application. These steps or operations are merely examples. In embodiments of this application, other operations or variations of various operations may be further performed. In addition, the steps may be performed in sequences different from those presented in embodiments of this application, and it is possible that not all of the operations in embodiments of this application need to be performed. The core network device may include only one core network element (for example, the AMF), or, for example, may include a plurality of core network elements (for example, at least two of the foregoing initial AMF, target AMF, and NSSF). This is not specially limited in this application.

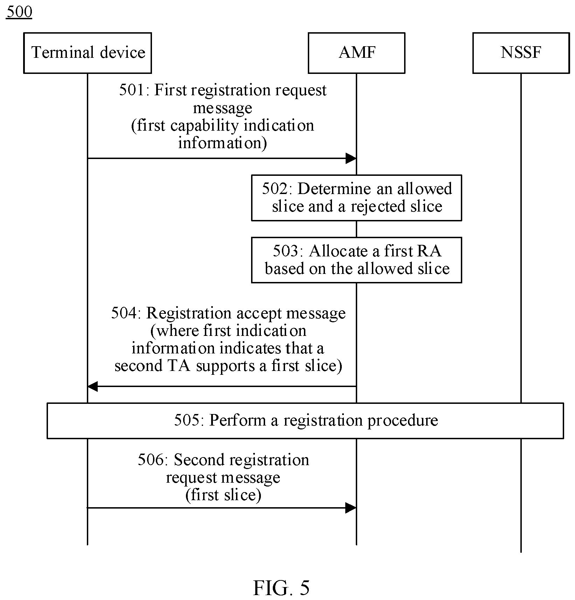

The following describes the communication method provided in embodiments of this application with reference to the accompanying drawings. An example in which a core network device in the embodiments is an AMF is used for description. FIG. 5 is a schematic flowchart of a communication method 500 according to this application. The following describes the communication method 500 provided in this embodiment of this application with reference to FIG. 5. The method 500 includes the following steps.

Step 501: A terminal device in a first tracking area TA sends a first registration request message to an AMF, and the AMF receives the first registration request message from the terminal device.

The method 500 provided in this embodiment of this application may be applied to a scenario in which the terminal device initiates a registration procedure to a core network. A condition for triggering the registration procedure by the terminal device may be any one of the foregoing five conditions. For example, when the terminal device moves to a TA (that is, the first TA) outside an original registration area RA, a mobility registration update is caused. Therefore, a new registration procedure needs to be initiated to the core network. In this embodiment of this application, the condition for triggering the registration procedure by the terminal device is not limited to the foregoing five conditions. With continuous evolution of a 3GPP standard, the registration procedure may be triggered by any other condition in the future.

The terminal device accesses the network through a cell in the first TA and performs the registration procedure. The terminal device may send the first registration request message to the AMF through a radio access network (RAN) device. Correspondingly, the AMF receives the registration request message through the radio access network device. The registration request message herein may alternatively have another name in the future. This is not limited in this embodiment of this application.

The first registration request message includes information about a requested slice (requested NSSAI), and the requested slice may include a plurality of slices. In this case, the first registration request message may include identifiers (for example, SSTs and SDs) corresponding to the plurality of slices. The first registration request message is, for example, an N1 message. To be specific, the terminal device may send the first registration request message to the AMF through an N1 interface.

Step 502: The AMF determines an allowed slice (allowed NSSAI) and a rejected slice (rejected NSSAI).

After receiving the first registration request message, the AMF performs slice selection (slice selection) for the terminal device. The AMF performs comprehensive determining based on information such as subscription data of the terminal device, the requested slice, a roaming agreement, and a local configuration, to select the allowed slice and the rejected slice for the terminal device.

The AMF may determine a set including one or more slices in the requested slice as the allowed slice. To be specific, the allowed slice may be a subset or a universal set of the slices included in the requested slice. On this basis, the AMF may determine a set including a remaining slice in the requested slice as the rejected slice. For example, a slice that is not supported by a current TA (that is, the first TA) in the requested slice may be determined as the rejected slice.

To describe the technical solutions in this application more conveniently and efficiently, in a specific example, Table 2 is a table of correspondences between different types of slices and a specific slice. As shown in Table 2, the terminal device located in a TA #1 (that is, the first TA) sends the first registration request message to the AMF, where the first registration request message includes the requested slice, and the requested slice includes three slices in total: a slice #1, a slice #2, and a slice #3. The AMF determines that the TA #1 in which the terminal is currently located supports only the slice #3 and does not support the other two slices. Therefore, the AMF determines that the slice #3 is an allowed slice, and the slice #1 and the slice #2 jointly constitute a rejected slice. That is, both the slice #1 and the slice #2 are rejected slices.

**Table 2**

| | | |
|---|---|---|
| Requested slice | | Slice #1, slice #2, and slice #3 |
| Allowed slice | | Slice #3 |
| Rejected slice | | Slice #1 and slice #2 |
| First RA | TA#1 | Slice #3 |
| | TA #2 | Slice #1 and slice #3 |
| | TA #3 | Slice #2 and slice #3 |
| | TA #4 | Slice #3 and slice #4 |
| | TA #5 | Slice #1, slice #2, and slice #3 |
| | TA #6 | Slice #1 and slice #2 |
| | TA #7 | Slice #1 and slice #4 |

Step 503: The AMF allocates the first registration area RA as a current RA of the terminal device based on the allowed slice.

Specifically, the AMF may allocate (allocate) an RA to the terminal device based on the allowed slice. The AMF may query for a status of a slice supported by each of a plurality of TAs around the first TA, and the AMF forms the first RA by using a plurality of TAs that support at least one slice in the allowed slice, and allocates the first RA to the terminal device. In other words, each TA in the first RA should support the at least one slice in the allowed slice. Herein, that a TA supports a slice may also be understood as that the slice is available in the TA. That the TA does not support a slice may also be understood as that the slice is unavailable in the TA.

A specific example is used for description. Table 2 also shows support statuses of different TAs for the slice and that are obtained by the AMF through querying. The AMF obtains, through querying, seven TAs including the TA #1 to the TA #7. The TA #1 is a TA in which the terminal initiates a registration request, that is, the TA#1 is the first TA. The AMF determines that the allowed slice includes only the slice #3. For the TA #2 to the TA #7 that are around the TA #1 and that are obtained by the AMF through querying, TAs that support the slice #3 are the TA #2 to the TA #5. Therefore, the AMF forms the first RA by using five TAs in total, that is, the TA #1 to the TA #5. However, because the TA #6 and the TA #7 do not support the slice #3, the TA #6 and the TA #7 cannot be allocated to the first RA.

A quantity of the plurality of TAs in the foregoing example is merely an example for description. In this application, a quantity of TAs obtained through querying by the AMF is not limited, and a quantity of TAs included in the RA is not limited either. Optionally, the AMF may query an NSSF or another core network element for the TA and related information about a network slice that can be used in the TA.

Optionally, in another implementation, the AMF may not be capable of independently completing step 502 and step 503. In this case, the AMF may complete step 502 and step 503 by using network elements such as an NSSF and a UDM. For example, at least one of the foregoing steps may be completely completed by the NSSF, and the NSSF may notify the AMF of a corresponding result. For details, refer to the foregoing descriptions of step 4 and step 5. That the AMF, the NSSF, and the UDM jointly complete slice selection and allocate the RA to the terminal device belongs to a conventional technology, and details are not described herein again.

For example, the AMF may further exchange information with the NSSF, and obtain information about the allowed slice and the rejected slice from the NSSF. In this case, a decision network element is the NSSF, and the AMF may receive and forward the message.

Step 504: The AMF sends a registration accept message to the terminal device, and the terminal device receives the registration accept message from the AMF, where the registration accept message may include the information about the allowed slice, the information about the rejected slice, and information about the first RA.

The registration accept message is for responding to the first registration request message. After determining the allowed slice, the rejected slice, and the first RA, the AMF may include the foregoing information in the registration accept message, and send the registration accept message to the terminal device. The AMF may send the registration accept message to the terminal device through the radio access network (RAN) device. Correspondingly, the terminal device receives the registration accept message through the radio access network device. The registration accept message herein may alternatively have another name in the future. This is not limited in this embodiment of this application. The registration accept message may be, for example, an N2 message. To be specific, the AMF may send the registration accept message to the terminal device through an N2 interface.

Optionally, the allowed slice may include one or more slices, and the registration accept message may include identification information of the one or more slices. Based on the foregoing example, the allowed slice includes the slice #3, and a corresponding information element (or bit) of the registration accept message may carry an identifier of the slice #3. For example, the identifier may be S-NSSAI.

Optionally, the rejected slice may include one or more slices, and the registration accept message may include identification information of the one or more slices. Based on the foregoing example, the rejected slice includes the slice #1 and the slice #2, and corresponding information elements (or bits) of the registration accept message may carry identifiers of the slice #1 and the slice #2. For example, the identifiers may be S-NSSAI.

Optionally, the first RA includes a plurality of TAs including the first TA, and the information about the first RA may include identification information of each of the plurality of TAs included in the first RA. An identifier of the TA may be, for example, a TAI or a TAC. Based on the foregoing example, the information about the first RA may include identifiers of the TA #1 to the TA #5. To be specific, corresponding information elements (or bits) of the registration accept message may carry the identifiers of the TA #1 to the TA #5.

Further, as shown in FIG. 5, different from the conventional technology, the registration accept message in this embodiment of this application further carries first indication information, where the first indication information indicates that a second TA supports a first slice, the second TA is one TA in the first RA, and the first slice is one slice in the rejected slice.

Optionally, the first indication information may be determined and generated by the AMF, or may be determined and generated by the NSSF. This is not specially limited in this application.

For example, the NSSF may determine and generate related information such as the allowed slice, the rejected slice, and the first RA, and the first indication information is generated by the AMF and added to the registration accept message.

Step 505: The terminal device continues to perform another registration procedure, to complete registration. In this case, the terminal device may establish a PDU session (PDU session) by using one or more slices in the allowed slice. Certainly, if the terminal device currently has no service requirement, the slice in the allowed slice may not be used.

Step 506: When the terminal device moves from the first TA to the second TA, the terminal device may send a second registration request message to the AMF based on the first indication information, where the second registration request message includes information about the first slice.

Specifically, when the terminal device moves from the first TA to the second TA, and the terminal device determines, based on a current service requirement (for example, a use requirement of an application (application, APP)), that the first slice needs to be accessed to establish the PDU session, the terminal device can learn, based on an indication of the first indication information, that the second TA in which the terminal device is currently located supports the first slice. Because the first slice is a slice that is rejected in a current RA (first RA), the terminal device automatically triggers a registration procedure, and sends a registration request message (that is, the second registration request message) to the AMF again, where a requested slice carried in the second registration request message includes information about the first slice. After being approved by the AMF, the terminal device may access the first slice to perform communication. For example, the second registration request message includes an identifier of the first slice. For example, the identifier may be S-NSSAI of the first slice.

According to the communication method 500 provided in this embodiment of this application, the registration accept message further carries first indication information, and the terminal device can learn of, based on the first indication information, a TA in which a specific rejected slice is available. For example, the terminal can learn, based on the first indication information, that the rejected first slice is actually available in the second TA. In this way, after moving to the second TA, if the terminal device still wants to use the first slice to perform network communication (for example, the establishment of the PDU session), the terminal device may initiate a registration request again, to request to access the first slice. Based on the foregoing setting, a quantity or types of network slices that can be used by the terminal device in a current wireless network coverage range can be increased, and types of PDU sessions that can be established by the terminal device are also increased, so that a requirement that the terminal device performs communication by using the network slice is met to a greater extent, thereby improving user experience.

In a specific example, as shown in Table 2, the first slice is the slice #1 in Table 2, and the second TA is the TA #2 in Table 2. The first indication information indicates to the terminal device that the TA #2 supports the slice #1, that is, the slice #1 is available in the TA #2. After the terminal device moves from the TA #1 in which the first registration request message is sent to the TA #2 (where the terminal device may camp on or pass through another TA during this period), if the terminal device still wants to access the slice #1 due to the service requirement, the terminal device may initiate a registration request again, to request to access the slice #1.

Optionally, when the terminal device moves from the first TA to the second TA, if the terminal device determines that the terminal device wants to access another slice in addition to the first slice, in this case, in addition to the first slice, the requested slice in the second registration request message may further include another slice. This is not specially limited in this application.

Optionally, when the terminal device moves from the first TA to the second TA, if the terminal device determines that the terminal device currently has no need to access the first slice (where the terminal device does not want to use the first slice), the terminal device may not send the second registration request message to the AMF, that is, in this case, the terminal device may not perform any action. Step 506 may be omitted.

It should be noted that the communication method 500 in this embodiment of this application actually provides another condition that can trigger the terminal device to initiate the registration procedure to the core network. To be specific, in addition to the foregoing five conditions, the communication method 500 provided in this embodiment of this application may be used as a sixth condition for triggering the registration procedure by the terminal device. On this basis, for step 501 in the method 500, that is, that the terminal device sends the first registration request message to the AMF may alternatively be a registration procedure automatically triggered by the terminal device based on the first indication information. To be specific, in step 501, if the terminal device wants to use a rejected slice in the previous RA, and the terminal learns that the first TA in which the terminal is currently located supports the rejected slice, the terminal sends the first registration request message, to request to access the rejected slice.

Optionally, the first indication information may be carried in the registration accept message as an independent information element, and the first indication information may include an identifier of the second TA and the identifier of the first slice.

For example, the identifier of the second TA may be a TAI or a TAC of the second TA, and the identifier of the first slice may be the S-NSSAI of the first slice.

Optionally, the three pieces of information, that is, the information about the rejected slice, the information about the first RA, and the first indication information may be carried in the registration accept message as three independent information elements, or two or three pieces of information may be carried in a same information element (where an advantage is that it helps reduce a size of the entire registration accept message). In other words, the two or three pieces of information may share one information element. A specific implementation of the registration accept message is not specially limited in this application.

Optionally, the second TA may be any one of a plurality of TAs that support at least one slice in the rejected slice and that are in the first RA. For example, as shown in Table 2, the second TA may be any one of the TA #2, the TA #3, and the TA #5.

Optionally, the second TA may support only one slice in the rejected slice. In this case, the first slice is a unique slice supported by the second TA.

For example, as shown in Table 2, the second TA may be the TA #2, and the TA #2 supports only the slice #1 in the rejected slice. In this case, the first slice is the slice #1.

For another example, as shown in Table 2, the second TA may be the TA #3, and the TA #3 supports only the slice #2 in the rejected slice. In this case, the first slice is the slice #2.

Optionally, the second TA may support a plurality of slices in the rejected slice. In this case, the first slice may be any one of the plurality of slices supported by the second TA.

For example, as shown in Table 2, the second TA may be the TA #5, and the TA #5 supports the slice #1 and the slice #2 in the rejected slice. In this case, the first slice may be the slice #1 or the slice #2.

Optionally, when the second TA supports the plurality of slices in the rejected slice, the first indication information may indicate a plurality of slices or all slices in the plurality of slices (where the first slice is one of the slices) supported by the second TA.

For example, the second TA may be the TA #5, and the TA #5 supports the slice #1 and the slice #2 in the rejected slice. In this case, the first indication information may indicate that the TA #5 supports the slice #1 and the slice #2.

An advantage of the foregoing setting is that because an information amount of the first indication information increases, the terminal device can learn, based on the first indication information, that a plurality of rejected slices may be available in the second TA. In this way, after moving to the second TA, if the terminal device wants to use at least one of the plurality of rejected slices to perform communication, the terminal device may initiate a registration request again, to request to access a corresponding slice. Therefore, the quantity or types of network slices that can be used by the terminal device in the current wireless network coverage range can be increased to a greater extent, so that the requirement that the terminal device performs communication by using the network slice is met to the greater extent, thereby further improving user experience.

Optionally, the first indication information includes support information of a plurality of TAs for the rejected slice, each of the plurality of TAs belongs to the first RA and supports the at least one slice in the rejected slice, and the second TA is any one of the plurality of TAs.

In other words, the first indication information has a larger information amount, and can simultaneously indicate support statuses of the plurality of TAs for the rejected slice. For example, one of the TAs supports a specific slice or specific slices, and another TA supports a specific slice or specific slices. After the terminal device moves to one of the TAs, the terminal device determines, based on an actual requirement, that one or more rejected slices supported by the TAneed to be accessed, and then may initiate the second registration request message to request to access a corresponding slice. The foregoing setting greatly increases a probability and a frequency of sending the second registration request message, that is, a probability and a frequency of sending an access request that is for the rejected slice are also greatly increased. Therefore, the quantity or types of network slices that can be used by the terminal device in the current wireless network coverage range can be increased to the greater extent, so that the requirement that the terminal device performs communication by using the network slice is met to the greater extent, thereby further improving user experience.

Optionally, the first indication information further indicates that a third TA supports a second slice, the third TA belongs to the first RA, the second slice is one slice in the rejected slice, and the second slice and the first slice may be the same or may be different.

For example, as shown in Table 2, the second TA may be the TA #2, and the TA #2 supports only the slice #1 in the rejected slice. In this case, the first slice is the slice #1. The third TA may be the TA #5, and the TA #5 supports the slice #1 and the slice #2 in the rejected slice. In this case, the second slice may be the slice #1 or the slice #2.

Similarly, when the third TA supports a plurality of slices in the rejected slice, the first indication information may indicate a plurality of slices or all slices in the plurality of slices (where the second slice is one of the slices) supported by the third TA.

Optionally, the first indication information includes the support information of the plurality of TAs for the rejected slice, and the plurality of TAs are all TAs that support the at least one slice in the rejected slice and that are in the first RA.

For example, as shown in Table 2, in the first RA, the TA #2, the TA #3, and the TA #5 support at least one rejected slice, and the first indication information includes support information of the three TAs for the rejected slice. To be specific, the first indication information may simultaneously indicate a slice or slices supported by the three TAs.

Optionally, the first indication information includes the support information of the plurality of TAs for the rejected slice, the support information indicates that each of the plurality of TAs supports the at least one slice in the rejected slice, or indicates a slice that is in the rejected slice and that is supported by each of the plurality of TAs, each of the plurality of TAs belongs to the first RA, and the plurality of TAs include the second TA.

Optionally, the support information may include identifiers of the plurality of TAs and identifiers of the plurality of rejected slices. There are mapping relationships (correspondences) between the identifiers of the plurality of TAs and the identifiers of the plurality of slices. Based on the support information, rejected slices supported by each TA and TAs that support each slice can be learned of.

In a possible specific implementation, the first indication information may exist in a form of a mapping table. The mapping table includes one-to-one correspondences between a plurality of specific TAs and rejected slices, and the mapping table is sent based on a specific time sequence, for example:
TA #2: slice #1; TA #3: slice #2; and TA #5: slice #1 and slice #2, where in this case, the TA is used as an index; or
slice #1: TA #2 and TA #5; and slice #2: TA #3 and TA #5, where in this case, the slice is used as an index.

Further, before step 504 in which the terminal device receives the registration accept message from the AMF, that is, before the AMF sends the registration accept message to the terminal device, the method 500 further includes:

The terminal device sends first capability indication information to the core network device, where the first capability indication information indicates that the terminal device has a capability of receiving the first indication information. The AMF sends the registration accept message to the terminal device based on the first capability indication information.

Specifically, that protocol releases executed (supported) by terminal devices may be inconsistent is taken into account. For example, some terminals execute a protocol of a higher release, some terminals execute a protocol of a lower release, and protocols of some releases may not support the terminal in receiving the first indication information. Therefore, to avoid problems such as a receiving error and unrecognizable receiving, the method 500 provided in this embodiment of this application further specifies that the terminal device sends the first capability indication information to the AMF in advance, to indicate whether the terminal device has the capability of receiving the first indication information. When the AMF determines that the terminal device has the capability of receiving the first indication information, the registration accept message sent by the AMF to the terminal device carries the first indication information.

Optionally, the first capability indication information may be explicitly (directly) indicated. For example, as protocol- or system-specified, the first capability indication information is a string of specific codes or one bit of 0 or 1, or is distinguished by using NULL and non-NULL. Alternatively, the first capability indication information may be implicitly (indirectly) indicated. This is not limited in this application.

For example, the first capability indication information may include one bit of 1 to indicate that the terminal device has the capability of receiving the first indication information, and use one bit of 0 to indicate that the terminal device has no capability of receiving the first indication information.

Further, the first capability indication information may be carried in the first registration request message.

Optionally, the first capability indication information may alternatively be carried in another message in a conventional technology, or the terminal device may separately send the first capability indication information to the AMF. This is not limited in this application.

Optionally, in a possible alternative manner, the AMF may alternatively obtain capability information of the terminal device from another core network element (for example, the NSSF) through querying, and determine, based on the capability information, whether the terminal device has the capability of receiving the first indication information. In this case, an action of sending the first capability indication information by the terminal device to the AMF may be omitted.

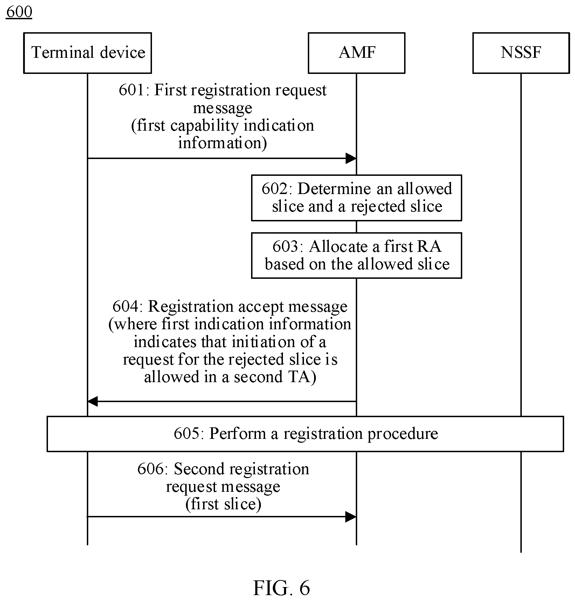

FIG. 6 is a schematic flowchart of a communication method 600 according to an embodiment of this application. The embodiment shown in FIG. 6 may be considered as a variant of the embodiment shown in FIG. 5. The following describes the communication method 600 provided in this embodiment of this application with reference to FIG. 6. The method 600 includes the following steps.

Step 601: A terminal device in a first tracking area TA sends a first registration request message to an AMF, where the first registration request message carries a requested slice.

Correspondingly, in step 601, the AMF receives the first registration request message from the terminal device.

Optionally, the first registration request message may further carry first capability indication information, where the first capability indication information indicates that the terminal device has a capability of receiving first indication information. In a subsequent step, the AMF may send a registration accept message to the terminal device based on the first capability indication information.

Step 602: The AMF determines an allowed slice and a rejected slice.

Step 603: The AMF allocates a first registration area RA as a current RA of the terminal device based on the allowed slice.

Step 604: The AMF sends the registration accept message to the terminal device, where the registration accept message includes information about the allowed slice, information about the rejected slice, information about the first RA, and the first indication information.

Correspondingly, the terminal device receives the registration accept message from the AMF.

Step 605: The terminal device continues to perform another registration procedure, to complete registration.

Step 606: When the terminal device moves from the first TA to a second TA, the terminal device sends a second registration request message to the AMF based on the first indication information, where the second registration request message includes information (for example, an identifier) about a first slice.

Correspondingly, the AMF receives the second registration request message from the terminal device.

The foregoing steps 601 to 606 may be understood with reference to steps 501 to 506 in the method 500, and only a difference is described herein. In this embodiment of this application, a main difference from the embodiment shown in FIG. 5 lies in that content indicated by the first indication information in the method 600 is different from that in the method 500. As a result, success rates in which the terminal device requests to access the first slice from the AMF by using the second registration request message are also different.

Specifically, in this embodiment, the first indication information indicates that the terminal device is allowed to initiate, in the second TA, a connection request for any slice in the rejected slice, the second TA belongs to the first RA and supports at least one slice in the rejected slice, and the rejected slice includes the first slice.

According to the method 600 provided in this embodiment of this application, the registration accept message further carries first indication information, and the first indication information only indicates, to the terminal device, that the second TA may support one or more slices in the rejected slice, but does not explicitly indicate a specific slice or specific slices supported by the second TA. After moving to the second TA, if the terminal device still wants to use the first slice to perform network communication (for example, establishment of a PDU session), the terminal device automatically triggers a registration procedure, and sends a registration request message (that is, the second registration request message) to the AMF again, where a requested slice carried in the second registration request message includes information about the first slice. After being approved by the AMF, the terminal device may access the first slice to perform communication. Based on the foregoing setting, a quantity or types of network slices that can be used by the terminal device in a current wireless network coverage range can be increased, and types of PDU sessions that can be established by the terminal device are also increased, so that a requirement that the terminal device performs communication by using the network slice is met to a greater extent, thereby improving user experience.

In addition, compared with the foregoing embodiment, the method 600 provided in this embodiment does not disclose support information of the second TA for the rejected slice, so that it can be ensured that slice deployment information of an operator is not disclosed to the terminal device, thereby achieving higher security performance. Certainly, when the terminal device initiates, in the second TA, a connection request for the first slice by using the second registration request message, the connection request may be rejected because the second TA does not support the first slice.

For example, the first TA is a TA #1 in Table 2, the second TA is a TA #2, and the TA #2 supports a slice #1 in the rejected slice. After moving from the TA #1 to the TA #2, the terminal device determines that the terminal device needs to access the slice #1 (that is, the first slice is the slice #1). In this case, the terminal device may initiate a registration request again, to request to access the slice #1. Because the first slice (slice #1) requested by the terminal device is a slice supported by the second TA, the AMF may allow the terminal device to access the first slice.

For another example, the first TA is the TA #1 in Table 2, the second TA is the TA #2, and the TA #2 supports the slice #1 in the rejected slice. After moving from the TA #1 to the TA #2, the terminal device determines that the terminal device needs to access a slice #2 (that is, the first slice is the slice #2). In this case, the terminal device may initiate a registration request again, to request to access the slice #2. Because the first slice (slice #2) requested by the terminal device is not supported by the second TA, the AMF may reject access of the terminal device to the first slice.

Optionally, the first indication information may be carried in the registration accept message as an independent information element, and in this case, the first indication information may include an identifier of the second TA, for example, a TAI or a TAC.

Optionally, the second TA may be any one of a plurality of TAs that support at least one slice in the rejected slice and that are in the first RA. For example, as shown in Table 2, the second TA may be any one of the TA #2, a TA #3, and a TA #5.

Optionally, the first indication information indicates that the terminal device is allowed to initiate, in any TA in a TA set or list (list), the connection request for any slice in the rejected slice, each TA in the TA set or list supports the at least one slice in the rejected slice, and the second TA is any one in the TA set.

In other words, the first indication information may indicate that the terminal device is allowed to initiate, in each of the plurality of TAs, the connection request for any slice in the rejected slice. Each of the plurality of TAs supports the at least one slice in the rejected slice. In this case, the first indication information may include identifiers of the plurality of TAs.

For example, as shown in Table 2, if any one of the TA #2, the TA #3, and the TA #5 supports the at least one slice in the rejected slice, the TA set may include a plurality of or all of the TA #2, the TA #3, and the TA #5. The first indication information may indicate that the terminal device can initiate, in the TA #2 and the TA #3 (where in this case, the TA set includes the TA #2 and the TA #3), the connection request for any slice in the rejected slice. The first indication information may include identification information of the TA #2 and the TA #3.

Based on the foregoing setting, the terminal device may initiate the connection request for any slice in the rejected slice when moving to any one of the TAs. Therefore, a frequency of sending the second registration request message can be increased, and the quantity or types of network slices that can be used by the terminal device in the current wireless network coverage range can be increased to a greater extent, so that the requirement that the terminal device performs communication by using the network slice is met to the greater extent, thereby further improving user experience.

Optionally, the first indication information includes the TA set, the TA set includes an identifier of a TA in which the terminal device is allowed to initiate the connection request for any slice in the rejected slice, and the TA set includes the identifier of the second TA.

Optionally, the TA set may be a set of all TAs that support the at least one slice in the rejected slice and that are in the first RA. For example, the TA set may include the TA #2, the TA #3, and the TA #5 in Table 2.

In this case, before sending the registration accept message to the terminal device, the AMF may first determine the TA set. For example, the TA that supports the at least one slice in the rejected slice and that is in the first RA is placed into the set. For example, it is determined that the second TA belongs to the first RA and supports the at least one slice in the rejected slice, and therefore the second TA may be placed into the set.

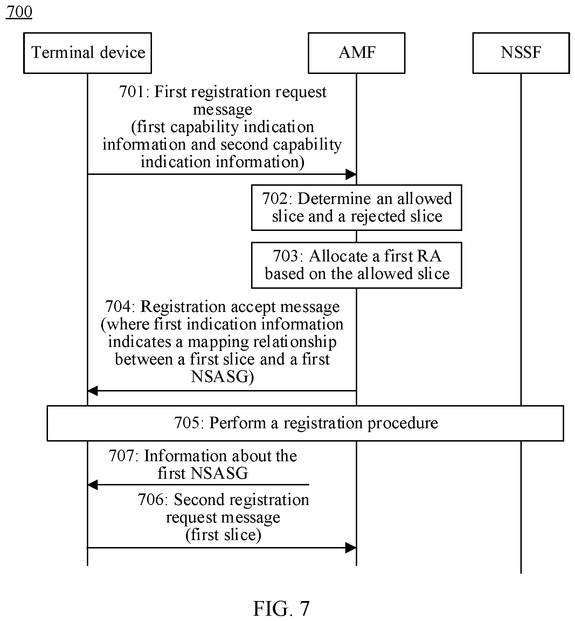

FIG. 7 is a schematic flowchart of a communication method 700 according to an embodiment of this application. The embodiment shown in FIG. 7 may be considered as a variant of the embodiment shown in FIG. 5. The following describes the communication method 700 provided in this embodiment of this application with reference to FIG. 7. The method 700 includes the following steps.

Step 701: A terminal device in a first tracking area TA sends a first registration request message to an AMF, where the first registration request message carries a requested slice.

Correspondingly, in step 701, the AMF receives the first registration request message from the terminal device.

Optionally, the first registration request message may further carry first capability indication information, where the first capability indication information indicates that the terminal device has a capability of receiving first indication information. In a subsequent step, the AMF may send a registration accept message to the terminal device based on the first capability indication information.

Step 702: The AMF determines an allowed slice and a rejected slice.

Step 703: The AMF allocates a first registration area RA as a current RA of the terminal device based on the allowed slice.

Step 704: The AMF sends the registration accept message to the terminal device, where the registration accept message includes information about the allowed slice, information about the rejected slice, information about the first RA, and the first indication information. The first indication information indicates that there is a mapping relationship between a first slice and a first network slice access stratum group (network slice access stratum group, NSASG), the first slice belongs to the rejected slice, and the first RA includes a second TA.

Correspondingly, the terminal device receives the registration accept message from the AMF.

Step 705: The terminal device continues to perform another registration procedure, to complete registration.

Step 707: The terminal device receives information about the first NSASG via a broadcast message of the second TA.

Step 706: The terminal device camps on the second TA, and sends a second registration request message to the AMF based on the first indication information, where the second registration request message includes information about the first slice.

Correspondingly, the AMF receives the second registration request message from the terminal device.

The foregoing steps 701 to 706 may be understood with reference to steps 501 to 506 in the method 500, and only a difference is described herein. In this embodiment of this application, a main difference from the embodiment shown in FIG. 5 lies in that content or a form indicated by the first indication information in the method 700 is different from that in the method 500. In this embodiment, the first indication information indicates that there is the mapping relationship between the first slice and the first NSASG.

Specifically, a plurality of slices may be mapped to one NSASG, and then information about the NSASG is carried in a message broadcast by a RAN air interface. The terminal device may obtain, through listening via the air interface, an NSASG corresponding to a current cell (cell) or TA. In other words, the NSASG is at a granularity of the cell or the TA. Because each cell belongs to only one TA, a relationship between the NSASG and the TA may be many-to-one or one-to-one.

The terminal device may query a core network, or the core network configures a correspondence between the NSASG and the slice. For example, if an NSASG #1 corresponds to a slice #1 and a slice #2, a cell or a TA that broadcasts the NSASG #1 should support the slice #1 and the slice #2. However, the correspondence needs to be configured and updated by the core network, and the terminal device cannot learn of the correspondence from broadcast information.

In step 704, the AMF sends the first indication information to the terminal device. The first indication information indicates that there is the mapping relationship between the first slice and the first NSASG, that is, indicates that a TA corresponding to the first NSASG supports the first slice. In addition, the first slice belongs to the rejected slice, and the first RA includes the second TA.

Optionally, in another possible implementation, the first slice may alternatively not belong to the rejected slice.

Optionally, in another possible implementation, the second TA may alternatively not belong to the first RA.

In step 707, the terminal device receives the information about the first NSASG via the broadcast message of the second TA of the first RA. For example, the information about the first NSASG may be carried in a system information block (for example, in a system information block 1 (system information block 1, SIB 1)) in the broadcast message.

In step 706, the terminal device receives the information about the first NSASG, and can determine, based on the first indication information, that the second TA (that is, a TA in which the information about the first NSASG is sent) corresponding to the information about the first NSASG can support the first slice. Therefore, the terminal device may camp on the second TA (for example, a cell in the second TA), and send the second registration request message to the AMF. The second registration request message includes information about the first slice. After being approved by the AMF, the terminal device may access the first slice to perform communication.

According to the method 700 provided in this embodiment of this application, the registration accept message further carries first indication information, and the terminal device can learn of, based on the first indication information, an NSASG corresponding to a TA in which a specific rejected slice is available. For example, the terminal can learn, based on the first indication information, that the rejected first slice is actually available in the second TA corresponding to the first NSASG. When the terminal device receives the information about the first NSASG via the broadcast message of the second TA, the terminal can learn that the second TA can support the first slice. In this case, if the terminal device determines that the terminal device still wants to use the first slice to perform network communication (for example, establishment of a PDU session), the terminal device may camp on the second TA, and initiate a registration request again, to request to access the first slice. Based on the foregoing setting, a quantity or types of network slices that can be used by the terminal device in a current wireless network coverage range can be increased, and types of PDU sessions that can be established by the terminal device are also increased, so that a requirement that the terminal device performs communication by using the network slice is met to a greater extent, thereby improving user experience.

In addition, in the method 700, a specific TA slice deployment situation is not disclosed to the terminal device, and only a mapping relationship between the NSASG and the rejected slice is provided. When the NSASG broadcast information is obtained through detection, a request for the rejected slice may be triggered, and there is no need to be handed over to a corresponding TA for triggering. For example, in this case, the terminal device may be located only at an edge of the TA. This is more flexible and is applicable to more scenarios.

Optionally, the first indication information includes an identifier of the first slice and an identifier of the first NSASG.

Optionally, the first indication information may indicate that there are mapping relationships between the first slice and a plurality of NSASGs including the first NSASG, that is, indicate that the first slice corresponds to the plurality of NSASGs, and the first NSASG may be any one of the plurality of NSASGs. After receiving a message of any NSASG, the terminal device may camp on a corresponding TA, and initiate a registration request again, to request to access the first slice.

Optionally, the first indication information may indicate that there are mapping relationships between a plurality of slices including the first slice and the first NSASG, that is, indicate that the plurality of slices correspond to the first NSASG, indicating that a TA corresponding to the first NSASG may support the plurality of slices. The first slice may be any one of the plurality of slices.

Optionally, the first indication information indicates mapping relationships between a plurality of slices (for example, all) in the rejected slice and the NSASG, and the first slice is any one of the plurality of slices.

The foregoing setting greatly increases a probability and a frequency of sending the second registration request message, that is, a probability and a frequency of sending an access request that is for the rejected slice are also greatly increased. Therefore, the quantity or types of network slices that can be used by the terminal device in the current wireless network coverage range can be increased to a greater extent, so that the requirement that the terminal device performs communication by using the network slice is met to the greater extent, thereby further improving user experience.

In a possible specific implementation, the first indication information may exist in a form of a mapping table. The mapping table includes correspondences between a plurality of specific slices and a plurality of NSASGs, and the mapping table is sent based on a specific time sequence, for example, NSASG #1: slice #1 and slice #2 or slice #1: NSASG #1 and NSASG #2.

Further, before step 704 in which the terminal device receives the registration accept message from the AMF, that is, before the AMF sends the registration accept message to the terminal device, the method 700 further includes:

The terminal device sends second capability indication information to a core network device, where the second capability indication information indicates that the terminal device has a capability of receiving the information about the NSASG. The AMF sends the registration accept message to the terminal device based on the second capability indication information.

The method 700 provided in this embodiment of this application further specifies that the terminal device sends the second capability indication information to the AMF in advance, to indicate whether the terminal device has the capability of receiving the information about the NSASG. When the AMF determines that the terminal device has the capability of receiving the information about the NSASG, the registration accept message sent by the AMF to the terminal device carries the first indication information.

Similarly, the second capability indication information may be explicitly (directly) indicated. For example, as protocol- or system-specified, the second capability indication information is a string of specific codes or one bit of 0 or 1, or is distinguished by using NULL and non-NULL. Alternatively, the second capability indication information may be implicitly (indirectly) indicated. This is not limited in this application.

For example, the second capability indication information may include one bit of 1 to indicate that the terminal device has the capability of receiving the information about the NSASG, and use one bit of 0 to indicate that the terminal device has no capability of receiving the information about the NSASG.

Further, the second capability indication information may be carried in the first registration request message.

Optionally, the second capability indication information may alternatively be carried in another message in a conventional technology. Alternatively, the terminal device may separately send the second capability indication information to the AMF, or send the first capability indication information and the second capability indication information to the AMF after integrating and packaging the first capability indication information and the second capability indication information. This is not limited in this application.

Optionally, in a possible alternative manner, the AMF may alternatively obtain capability information of the terminal device from another core network element (for example, an NSSF) through querying, and determine, based on the capability information, whether the terminal device has the capability of receiving the information about the NSASG. In this case, an action of sending the second capability indication information by the terminal device to the AMF may be omitted.

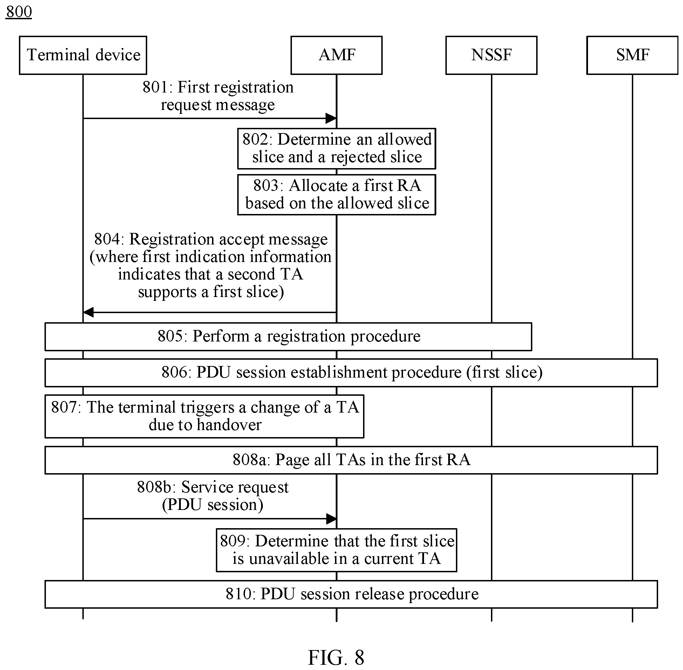

FIG. 8 is a schematic flowchart of a communication method 800 according to an embodiment of this application. The embodiment shown in FIG. 8 may be considered as a variant of the embodiment shown in FIG. 5. The following describes the communication method 800 provided in this embodiment of this application with reference to FIG. 8. The method 800 includes the following steps.

Step 801: A terminal device in a first tracking area TA sends a first registration request message to an AMF, where the first registration request message carries a requested slice.

Correspondingly, in step 801, the AMF receives the first registration request message from the terminal device.

Optionally, the first registration request message may further carry first capability indication information, where the first capability indication information indicates that the terminal device has a capability of receiving first indication information. In a subsequent step, the AMF may send a registration accept message to the terminal device based on the first capability indication information.

Step 802: The AMF determines an allowed slice and a rejected slice.

Step 803: The AMF allocates a first registration area RA as a current RA of the terminal device based on the allowed slice.

Step 804: The AMF sends the registration accept message to the terminal device, where the registration accept message includes information about the allowed slice, information about the rejected slice, information about the first RA, and the first indication information, the first indication information indicates that a second TA supports a first slice, the second TA is one TA in the first RA, and the first slice is one slice in the rejected slice.

Correspondingly, the terminal device receives the registration accept message from the AMF.

Step 805: The terminal device continues to perform another registration procedure, to complete registration.

The foregoing steps 801 to 805 may be understood with reference to steps 501 to 505 in the method 500, and only a difference is described herein. In this embodiment of this application, a main difference from the embodiment shown in FIG. 5 lies in that in the method 500, when the terminal device moves from the first TA to the second TA, the terminal device sends the second registration request message to the AMF based on the first indication information, where the second registration request message includes information about the first slice. However, in this embodiment, the terminal device directly initiates a session establishment request, and skips a registration procedure.

Specifically, the method 800 further includes the following steps.

Step 806: When the terminal device is located in the second TA area supporting the first slice, if the terminal device still needs to access the first slice (which may be determined based on a requirement of an APP or the like), the terminal device initiates, based on the first indication information, the session establishment request, and adds the first slice supported by the second TA to the session establishment request. The AMF does not reject the session establishment request of the terminal device based on the current TA of the terminal device and a slice status supported by the TA, and performs a session establishment procedure.

Step 807: The terminal device triggers a change of the TA due to handover (handover).

Step 808a: The terminal device enters an idle (IDLE) state, and initiates a service request (service request) due to receiving a paging (paging) message (paging all TAs in the first RA), or step 808b is performed.

Step 808b: The terminal device initiates a service request due to a service requirement, where the service request carries information about a session that needs to be activated and the like.

Step 809: After discovering that the change of the TA is triggered due to a handover procedure of the terminal device in step 807, or receiving the service request of the terminal, the AMF verifies the current TA of the terminal device and slice information of the session of the terminal device. If there is a session whose slice is not supported in the current TA, a session release procedure is triggered.

Step 810: Perform a PDU session release procedure.

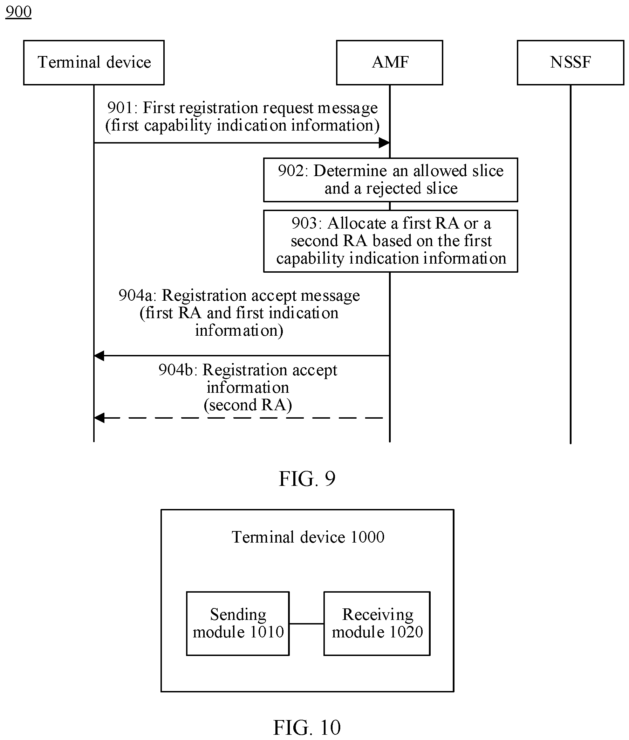

FIG. 9 is a schematic flowchart of a communication method 900 according to an embodiment of this application. The embodiment shown in FIG. 9 may be considered as a variant of the embodiment shown in FIG. 5. The following describes the communication method 900 provided in this embodiment of this application with reference to FIG. 9. The method 900 includes the following steps.

Step 901: A terminal device in a first tracking area TA sends a first registration request message to an AMF, where the first registration request message carries information about a requested slice and first capability indication information, and the first capability indication information indicates whether the terminal device has a capability of receiving the first indication information in any one of the foregoing embodiments.

Step 902: The AMF determines an allowed slice and a rejected slice.

Step 903: The AMF allocates a first RA or a second RA to the terminal device based on the allowed slice and an indication of the first capability indication information.

Specifically, when the first capability indication information indicates that the terminal device has the capability of receiving the first indication information, the AMF may allocate the first RA to the terminal device according to the method in step 503, step 603, or step 703, where at least one TA in the first RA can support at least one slice in the rejected slice. When the first capability indication information indicates that the terminal device has no capability of receiving the first indication information, in this case, the AMF allocates the second RA to the terminal device, and any TA in the second RA may not support the rejected slice. The following uses Table 3 as an example for description.

**Table 3**

| | | |
|---|---|---|
| Requested slice | | Slice #1, slice #2, and slice #3 |
| Allowed slice | | Slice #3 |
| Rejected slice | | Slice #1 and slice #2 |
| First RA | TA #1 | Slice #3 |
| | TA #2 | Slice #1 and slice #3 |
| | TA #3 | Slice #2 and slice #3 |
| | TA #4 | Slice #3 and slice #4 |
| | TA #5 | Slice #1, slice #3, and slice #4 |
| Second RA | TA #1 | Slice #3 |
| | TA #4 | Slice #3 and slice #4 |

In Table 3, the AMF determines that the allowed slice includes only the slice #3, and the rejected slice includes the slice #1 and the slice #2. If the first capability indication information indicates that the terminal device has the capability of receiving the first indication information, the first RA is allocated to the terminal device according to the method described in the foregoing embodiment (for details, refer to the descriptions of step 503). In this case, the first RA includes five TAs in total, that is, the TA #1 to the TA #5. If the first capability indication information indicates that the terminal device has no capability of receiving the first indication information, the second RA is allocated to the terminal device. Each TA in the second RA should support the slice #3. In addition to this, further, each TAin the second RA should not support any rejected slice, that is, cannot support the slice #1 and the slice #2. Therefore, in comparison with the first RA, the TA #2, the TA #3, and the TA #5 should be excluded from the second RA, that is, the second RA includes only the TA #1 and the TA #4.

When the first capability indication information indicates that the terminal device has the capability of receiving the first indication information, step 904a is performed.

Optionally, the AMF may obtain the first capability indication information in another manner. For example, the AMF may obtain the first capability indication information by using subscription information of the terminal device. The AMF may store the subscription information, or the AMF may obtain the subscription information (first capability indication information) from another network element, for example, an NSSF or a UDM. A manner in which the AMF obtains the first capability indication information is not specially limited in this application.

In step 904a, the AMF sends a registration accept message to the terminal device, where the registration accept message includes information about the rejected slice, information about the first registration area RA, and the first indication information. The first indication information indicates that a second tracking area TA supports a first slice, the second TA belongs to the first RA, and the first slice belongs to the rejected slice;
the first indication information indicates that the terminal device is allowed to initiate, in a second TA, a connection request for any slice in the rejected slice, the second TA belongs to the first RA and supports at least one slice in the rejected slice, and the rejected slice includes a first slice; or
the first indication information indicates that there is a mapping relationship between a first slice and a first network slice access stratum group NSASG, the first slice belongs to the rejected slice, and the first RA includes a second TA.

When receiving the registration accept message including the first indication information, the terminal device may continue to send a second registration request message to the AMF according to the related steps in the foregoing method 500 to method 800, where the second registration request message includes information about the first slice.

When the first capability indication information indicates that the terminal device has no capability of receiving the first indication information, step 904b is performed.

In step 904b, the AMF sends a registration accept message to the terminal device, where the registration accept message includes information about the rejected slice and information about the second RA, and no TA in the second RA supports the rejected slice.

In this case, when the terminal device receives the registration accept message that does not include the first indication information, and when the terminal device moves to s second TA, because the second TA does not belong to a current RA, a mobility registration update may be caused because the terminal device moves to a TA outside an original RA. Therefore, a new registration procedure needs to be initiated to a core network.

The foregoing describes in detail the communication methods in embodiments of this application with reference to FIG. 1 to FIG. 9. The following describes in detail apparatuses in embodiments of this application with reference to FIG. 10 to FIG. 13. It should be understood that the apparatuses shown in FIG. 10 to FIG. 13 can implement one or more steps in the method procedures shown in FIG. 5 to FIG. 9. To avoid repetition, details are not described herein again.

FIG. 10 is a schematic block diagram of a terminal device 1000 according to an embodiment of this application. As shown in FIG. 10, the terminal device 1000 includes a sending module 1010 and a receiving module 1020.

The sending module 1010 is configured to send a first registration request message to a core network device when the terminal device 1000 is in a first tracking area TA.

The receiving module 1020 is configured to receive a registration accept message from the core network device, where the registration accept message includes information about a rejected slice, information about a first registration area RA, and first indication information, the first indication information indicates that a second TA supports a first slice, the second TA belongs to the first RA, and the first slice belongs to the rejected slice.

The sending module 1010 is further configured to send a second registration request message to the core network device based on the first indication information when the terminal device 1000 moves from the first TA to the second TA, where the second registration request message includes information about the first slice.

Optionally, the first indication information includes an identifier of the second TA and an identifier of the first slice.

Optionally, the first indication information includes support information of a plurality of TAs for the rejected slice, each of the plurality of TAs belongs to the first RA and supports at least one slice in the rejected slice, and the second TA is any one of the plurality of TAs.

Optionally, before the receiving module receives the registration accept message from the core network device, the sending module is further configured to send first capability indication information to the core network device, where the first capability indication information indicates that the terminal device has a capability of receiving the first indication information.

Optionally, the first capability indication information is carried in the first registration request message.

In another implementation, the sending module 1010 is configured to send a first registration request message to a core network device when the terminal device 1000 is in a first tracking area TA.

The receiving module 1020 is configured to receive a registration accept message from the core network device, where the registration accept message includes information about a rejected slice, information about a first registration area RA, and first indication information, the first indication information indicates that the terminal device 1000 is allowed to initiate, in a second TA, a connection request for any slice in the rejected slice, the second TA belongs to the first RA and supports at least one slice in the rejected slice, and the rejected slice includes a first slice.

The sending module 1010 is further configured to send a second registration request message to the core network device based on the first indication information when the terminal device 1000 moves from the first TA to the second TA, where the second registration request message includes information about the first slice.

Optionally, the first indication information includes an identifier of the second TA.

Optionally, the first indication information indicates that the terminal device is allowed to initiate, in any TA in a TA set, the connection request for any slice in the rejected slice, each TA in the TA set supports the at least one slice in the rejected slice, and the second TA is any one in the TA set.

Optionally, before the receiving module receives the registration accept message from the core network device, the sending module is further configured to send first capability indication information to the core network device, where the first capability indication information indicates that the terminal device has a capability of receiving the first indication information.

Optionally, the first capability indication information is carried in the first registration request message.

In another implementation:

The sending module 1010 is configured to send a first registration request message to a core network device when the terminal device 1000 is in a first tracking area TA.

The receiving module 1020 is configured to receive a registration accept message from the core network device, where the registration accept message includes information about a rejected slice, information about a first registration area RA, and first indication information, the first indication information indicates that there is a mapping relationship between a first slice and a first network slice access stratum group NSASG, the first slice belongs to the rejected slice, and the first RA includes a second TA.

The receiving module 1020 is further configured to receive information about the first NSASG via a broadcast message of the second TA.

The sending module 1010 is further configured to send a second registration request message to the core network device when the terminal device camps on the second TA based on the first indication information, where the second registration request message includes information about the first slice.

Optionally, the first indication information includes an identifier of the first slice and an identifier of the first NSASG.

Optionally, the first indication information indicates mapping relationships between a plurality of slices in the rejected slice and an NSASG, and the first slice is any one of the plurality of slices.

Optionally, before the receiving module receives the registration accept message from the core network device, the sending module is further configured to send first capability indication information to the core network device, where the first capability indication information indicates that the terminal device has a capability of receiving the first indication information.

Optionally, the first capability indication information is carried in the first registration request message.

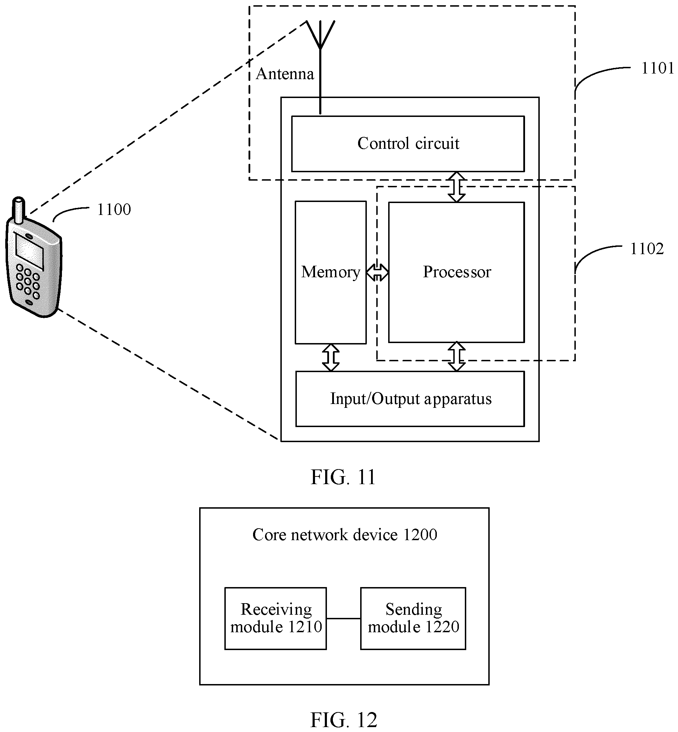

In a possible implementation, the terminal device 1000 may be a terminal device 1100 in the following figure. Functions of the sending module 1010 and the receiving module 1020 may be implemented by using a transceiver 1101 (that is, a combination of a control circuit and an antenna) of the terminal device. The following describes a structure of the terminal device 1100 in an embodiment of this application with reference to FIG. 11.

FIG. 11 is a schematic diagram of a structure of a terminal device 1100 according to an embodiment of this application. The terminal device 1100 may be used in the system shown in FIG. 1, and perform a function of the terminal device (UE) in the foregoing method embodiment. For ease of description, FIG. 11 shows only main components of the terminal device. As shown in FIG. 11, the terminal device 1100 includes a processor 1102, a memory, a control circuit, an antenna, and an input/output apparatus. The processor 1102 is mainly configured to: process a communication protocol and communication data, control the entire terminal device, execute a software program, and process data of the software program, for example, configured to support the terminal device in performing actions described in the foregoing method embodiments. The memory is mainly configured to store the software program and the data. The control circuit is mainly configured to: perform conversion between a baseband signal and a radio frequency signal, and process the radio frequency signal. A combination of the control circuit and the antenna may also be referred to as a transceiver 1101, mainly configured to send and receive a radio frequency signal in a form of an electromagnetic wave. The input/output apparatus, for example, a touchscreen, a display, or a keyboard, is mainly configured to receive data input by a user and output data to the user.

After the terminal device is powered on, the processor 1102 may read the software program in a storage unit, interpret and execute instructions of the software program, and process the data of the software program. When data needs to be wirelessly sent, after performing baseband processing on the to-be-sent data, the processor 1102 outputs a baseband signal to a radio frequency circuit. After performing radio frequency processing on the baseband signal, the radio frequency circuit sends a radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data and processes the data.

A person skilled in the art may understand that, for ease of description, FIG. 11 shows only one memory and one processor. In an actual terminal device, there may be a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process a communication protocol and communication data. The central processing unit is mainly configured to control the entire terminal device, execute the software program, and process the data of the software program. The processor in FIG. 11 may integrate functions of the baseband processor and the central processing unit. A person skilled in the art may understand that the baseband processor and the central processing unit may alternatively be independent processors and are interconnected by using a technology such as a bus. A person skilled in the art may understand that the terminal device may include a plurality of baseband processors to adapt to different network standards, and the terminal device may include a plurality of central processing units to enhance processing capabilities of the terminal device. Components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program. The processor executes the software program to implement a baseband processing function.

FIG. 12 is a schematic block diagram of a core network device 1200 according to an embodiment of this application. The core network device 1200 shown in FIG. 12 includes a receiving module 1210 and a sending module 1220.

The receiving module 1210 is configured to receive a first registration request message from a terminal device.

The sending module 1220 is configured to send a registration accept message to the terminal device, where the registration accept message includes information about a rejected slice, information about a first registration area RA, and first indication information.

The first indication information indicates that a second TA supports a first slice, the second TA belongs to the first RA, and the first slice belongs to the rejected slice;
the first indication information indicates that the terminal device is allowed to initiate, in a second TA, a connection request for any slice in the rejected slice, the second TA belongs to the first RA and supports at least one slice in the rejected slice, and the rejected slice includes a first slice; or
the first indication information indicates that there is a mapping relationship between a first slice and a first network slice access stratum group NSASG, the first slice belongs to the rejected slice, and the first RA includes a second TA.

The receiving module 1210 is further configured to receive a second registration request message from the terminal device, where the second registration request message includes information about the first slice.

Optionally, the first indication information includes an identifier of the second TA and an identifier of the first slice, the first indication information includes an identifier of the second TA, or the first indication information includes an identifier of the first slice and an identifier of the first NSASG.

Optionally, the first indication information includes support information of a plurality of TAs for the rejected slice, each of the plurality of TAs belongs to the first RA and supports the at least one slice in the rejected slice, and the second TA is any one of the plurality of TAs;
the first indication information indicates that the terminal device is allowed to initiate, in any TA in a TA set, the connection request for any slice in the rejected slice, each TA in the TA set supports the at least one slice in the rejected slice, and the second TA is any one in the TA set; or
the first indication information indicates mapping relationships between a plurality of slices in the rejected slice and an NSASG, and the first slice is any one of the plurality of slices.

Optionally, the receiving module 1210 is further configured to receive first capability indication information from the terminal device, where the first capability indication information indicates that the terminal device has a capability of receiving the first indication information.

The sending module 1220 is specifically configured to send the registration accept message to the terminal device based on the first capability indication information.

Optionally, the first capability indication information is carried in the first registration request message.

In another implementation:
The receiving module 1210 is configured to receive a first registration request message from a terminal device, where the first registration request message includes first capability indication information, and the first capability indication information indicates whether the terminal device has a capability of receiving first indication information.

The sending module 1220 is configured to send a registration accept message to the terminal device when the first capability indication information indicates that the terminal device has the capability of receiving the first indication information, where the registration accept message includes information about a rejected slice, information about a first registration area RA, and the first indication information. The first indication information indicates that a second tracking area TA supports a first slice, the second TA belongs to the first RA, and the first slice belongs to the rejected slice;
the first indication information indicates that the terminal device is allowed to initiate, in a second TA, a connection request for any slice in the rejected slice, the second TA belongs to the first RA and supports at least one slice in the rejected slice, and the rejected slice includes a first slice; or
the first indication information indicates that there is a mapping relationship between a first slice and a first network slice access stratum group NSASG, the first slice belongs to the rejected slice, and the first RA includes a second TA.

When the first capability indication information indicates that the terminal device has no capability of receiving the first indication information, the sending module is configured to send a registration accept message to the terminal device, where the registration accept message includes information about a rejected slice and information about a second RA, and no TA in the second RA supports the rejected slice.

Optionally, the first indication information includes an identifier of the second TA and an identifier of the first slice, the first indication information includes an identifier of the second TA, or the first indication information includes an identifier of the first slice and an identifier of the first NSASG.

Optionally, the first indication information includes support information of a plurality of TAs for the rejected slice, each of the plurality of TAs belongs to the first RA and supports the at least one slice in the rejected slice, and the second TA is any one of the plurality of TAs;
the first indication information indicates that the terminal device is allowed to initiate, in any TA in a TA set, the connection request for any slice in the rejected slice, each TA in the TA set supports the at least one slice in the rejected slice, and the second TA is any one in the TA set; or
the first indication information indicates mapping relationships between a plurality of slices in the rejected slice and an NSASG, and the first slice is any one of the plurality of slices.

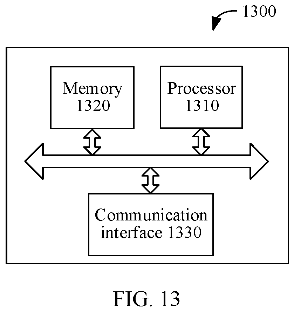

FIG. 13 is a schematic diagram of a structure of a core network device 1300 according to an embodiment of this application. As shown in FIG. 13, the core network device 1300 includes a processor 1310, a memory 1320, and a communication interface 1330. The memory 1320 stores instructions. The processor 1310 is configured to execute the instructions in the memory 1320. When the instructions are executed, the processor 1310 is configured to perform the method provided in any one of the foregoing method embodiments. The processor 1310 is further configured to control the communication interface 1330 to communicate with the outside.

Further, the processor 1310, the memory 1320, and the communication interface 1330 may communicate with each other through an internal connection path, to transmit a control and/or data signal.

Further, the memory 1320 may be integrated into the processor 1310, or may be disposed separately from the processor 1310.

Specifically, the core network device 1300 may be configured to perform steps in the communication methods in FIG. 5 to FIG. 9. The core network device 1300 may include modules that are in FIG. 12 and that are configured to perform the foregoing communication methods. In addition, the modules in the core network device 1300 and the foregoing other operations and/or functions are respectively used to implement corresponding procedures of the communication methods in FIG. 5 to FIG. 9. A specific process in which each module performs the foregoing corresponding steps has been described in detail in the method. For brevity, details are not described herein again.

It should be understood that, the processor in this embodiment of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through an example rather than a limitative description, many forms of random access memories (random access memories, RAMs) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

According to the method provided in embodiments of this application, this application further provides a computer program product. The computer program product includes computer program code. When the computer program code is run on a computer, the computer is enabled to perform the method in any one of the embodiments shown in FIG. 5 to FIG. 9.

According to the method provided in embodiments of this application, this application further provides a computer-readable medium. The computer-readable medium stores program code. When the program code is run on a computer, the computer is enabled to perform the method in any one of the embodiments shown in FIG. 5 to FIG. 9.

According to the method provided in embodiments of this application, this application further provides a system. The system includes the foregoing one or more terminal devices, one or more access network devices, and one or more core network devices.

All or some of the foregoing embodiments may be implemented by using software, hardware, firmware, or any combination thereof. When the software is used to implement the embodiments, all or some of the foregoing embodiments may be implemented in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

For ease of understanding, the following describes nouns used in a process of describing the solutions in this application.

In embodiments of this application, the "indication" may include a direct indication and an indirect indication, or may include an explicit indication and an implicit indication. Information indicated by using a piece of information (for example, the foregoing "indication information") is referred to as to-be-indicated information. In a specific implementation process, the to-be-indicated information is indicated in a plurality of manners, for example, but not limited to, a manner of directly indicating the to-be-indicated information, for example, indicating the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

In embodiments of this application, "first", "second", and various numbers are merely for differentiation for ease of description, and are not used to limit the scope of embodiments of this application. For example, the terms are used to differentiate between different indication information.

The "communication protocol" in embodiments of this application may be a standard protocol in a communication field, for example, may include an LTE protocol, an NR protocol, and a related protocol applied to a future communication system. This is not limited in this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a terminal device in a first tracking area TA, a first registration request message to a core network device;
receiving, by the terminal device, a registration accept message from the core network device, wherein the registration accept message comprises information about a rejected slice, information about a first registration area RA, and first indication information, the first indication information indicates that a second TA supports a first slice, the second TA belongs to the first RA, and the first slice belongs to the rejected slice; and
when the terminal device moves from the first TA to the second TA, sending, by the terminal device, a second registration request message to the core network device based on the first indication information, wherein the second registration request message comprises information about the first slice.

2. The communication method according to claim 1, wherein the first indication information comprises an identifier of the second TA and an identifier of the first slice.

3. The communication method according to claim 1 or 2, wherein the first indication information comprises support information of a plurality of TAs for the rejected slice, the support information indicates that each of the plurality of TAs supports at least one slice in the rejected slice, or indicates a slice that is in the rejected slice and that is supported by each of the plurality of TAs, each of the plurality of TAs belongs to the first RA, and the plurality of TAs comprise the second TA.

4. The communication method according to any one of claims 1 to 3, wherein before the receiving, by the terminal device, a registration accept message from the core network device, the method further comprises:
sending, by the terminal device, first capability indication information to the core network device, wherein the first capability indication information indicates that the terminal device has a capability of receiving the first indication information.

5. The communication method according to claim 4, wherein the first capability indication information is carried in the first registration request message.

6. A communication method, comprising:
sending, by a terminal device in a first tracking area TA, a first registration request message to a core network device;
receiving, by the terminal device, a registration accept message from the core network device, wherein the registration accept message comprises information about a rejected slice, information about a first registration area RA, and first indication information, the first indication information indicates that the terminal device is allowed to initiate, in a second TA, a connection request for any slice in the rejected slice, and the rejected slice comprises a first slice; and
when the terminal device moves from the first TA to the second TA, sending, by the terminal device, a second registration request message to the core network device based on the first indication information, wherein the second registration request message comprises information about the first slice.

7. The communication method according to claim 6, wherein the first indication information comprises an identifier of the second TA.

8. The communication method according to claim 6 or 7, wherein the first indication information comprises a TA set, the TA set comprises an identifier of a TA in which the terminal device is allowed to initiate the connection request for any slice in the rejected slice, and the TA set comprises the identifier of the second TA.

9. The communication method according to any one of claims 6 to 8, wherein before the receiving, by the terminal device, a registration accept message from the core network device, the method further comprises:
sending, by the terminal device, first capability indication information to the core network device, wherein the first capability indication information indicates that the terminal device has a capability of receiving the first indication information.

10. The communication method according to claim 9, wherein the first capability indication information is carried in the first registration request message.

11. A communication method, comprising:
sending, by a terminal device in a first tracking area TA, a first registration request message to a core network device;
receiving, by the terminal device, a registration accept message from the core network device, wherein the registration accept message comprises information about a rejected slice, information about a first registration area RA, and first indication information, and the first indication information indicates that there is a mapping relationship between a first slice and a first network slice access stratum group NSASG;
receiving, by the terminal device, information about the first NSASG via a broadcast message of a second TA in the first RA; and
camping on, by the terminal device, the second TA, and sending a second registration request message to the core network device based on the first indication information, wherein the second registration request message comprises information about the first slice.

12. The communication method according to claim 11, wherein the first indication information comprises an identifier of the first slice and an identifier of the first NSASG.

13. The communication method according to claim 11 or 12, wherein the first indication information indicates mapping relationships between a plurality of slices in the rejected slice and an NSASG, and the first slice is any one of the plurality of slices.

14. The communication method according to any one of claims 11 to 13, wherein before the receiving, by the terminal device, a registration accept message from the core network device, the method further comprises:
sending, by the terminal device, first capability indication information to the core network device, wherein the first capability indication information indicates that the terminal device has a capability of receiving the first indication information.

15. The communication method according to claim 14, wherein the first capability indication information is carried in the first registration request message.

16. A communication method, comprising:
receiving, by a core network device, a first registration request message from a terminal device;
sending, by the core network device, a registration accept message to the terminal device, wherein the registration accept message comprises information about a rejected slice, information about a first registration area RA, and first indication information, wherein
the first indication information indicates that a second TA supports a first slice, the second TA belongs to the first RA, and the first slice belongs to the rejected slice;
the first indication information indicates that the terminal device is allowed to initiate, in a second TA, a connection request for any slice in the rejected slice, and the rejected slice comprises a first slice; or
the first indication information indicates that there is a mapping relationship between a first slice and a first network slice access stratum group NSASG; and
receiving, by the core network device, a second registration request message from the terminal device, wherein the second registration request message comprises information about the first slice.

17. The communication method according to claim 16, wherein the first indication information comprises an identifier of the second TA and an identifier of the first slice;
the first indication information comprises an identifier of the second TA; or
the first indication information comprises an identifier of the first slice and an identifier of the first NSASG.

18. The communication method according to claim 16 or 17, wherein the first indication information comprises support information of a plurality of TAs for the rejected slice, the support information indicates that each of the plurality of TAs supports at least one slice in the rejected slice, or indicates a slice that is in the rejected slice and that is supported by each of the plurality of TAs, each of the plurality of TAs belongs to the first RA, and the plurality of TAs comprise the second TA;
the first indication information comprises a TA set, the TA set comprises an identifier of a TA in which the terminal device is allowed to initiate the connection request for any slice in the rejected slice, and the TA set comprises the identifier of the second TA; or
the first indication information indicates mapping relationships between a plurality of slices in the rejected slice and an NSASG, and the first slice is any one of the plurality of slices.

19. The communication method according to any one of claims 16 to 18, wherein the method further comprises:
receiving, by the core network device, first capability indication information from the terminal device, wherein the first capability indication information indicates that the terminal device has a capability of receiving the first indication information; and
the sending, by the core network device, a registration accept message to the terminal device comprises:
sending, by the core network device, the registration accept message to the terminal device based on the first capability indication information.

20. The communication method according to claim 19, wherein the first capability indication information is carried in the first registration request message.

21. The communication method according to any one of claims 16 to 19, wherein before the sending, by the core network device, a registration accept message to the terminal device, the method further comprises:
determining, by the core network device, that the second TA belongs to the first RA and supports the at least one slice in the rejected slice.

22. A communication method, comprising:
receiving, by a core network device, a first registration request message from a terminal device;
obtaining, by the core network device, first capability indication information, wherein the first capability indication information indicates whether the terminal device has a capability of receiving first indication information; and
when the first capability indication information indicates that the terminal device has the capability of receiving the first indication information, sending, by the core network device, a registration accept message to the terminal device, wherein the registration accept message comprises information about a rejected slice, information about a first registration area RA, and the first indication information, wherein the first indication information indicates that a second tracking area TA supports a first slice, the second TA belongs to the first RA, and the first slice belongs to the rejected slice;
the first indication information indicates that the terminal device is allowed to initiate, in a second TA, a connection request for any slice in the rejected slice, and the rejected slice comprises a first slice; or
the first indication information indicates that there is a mapping relationship between a first slice and a first network slice access stratum group NSASG; or
when the first capability indication information indicates that the terminal device has no capability of receiving the first indication information, sending, by the core network device, a registration accept message to the terminal device, wherein the registration accept message comprises information about a rejected slice and information about a second RA, and no TA in the second RA supports the rejected slice.

23. The communication method according to claim 22, wherein the first indication information comprises an identifier of the second TA and an identifier of the first slice;
the first indication information comprises an identifier of the second TA; or
the first indication information comprises an identifier of the first slice and an identifier of the first NSASG.

24. The communication method according to claim 22 or 23, wherein the first indication information comprises support information of a plurality of TAs for the rejected slice, the support information indicates that each of the plurality of TAs supports at least one slice in the rejected slice, or indicates a slice that is in the rejected slice and that is supported by each of the plurality of TAs, each of the plurality of TAs belongs to the first RA, and the plurality of TAs comprise the second TA;
the first indication information comprises a TA set, the TA set comprises an identifier of a TA in which the terminal device is allowed to initiate the connection request for any slice in the rejected slice, and the TA set comprises the identifier of the second TA; or
the first indication information indicates mapping relationships between a plurality of slices in the rejected slice and an NSASG, and the first slice is any one of the plurality of slices.

25. The communication method according to any one of claims 22 to 24, wherein the first capability indication information is carried in the first registration request message.

26. A terminal device, comprising at least one processor, wherein the at least one processor is configured to: be coupled to a memory, and read and execute instructions in the memory, to implement the method according to any one of claims 1 to 15.

27. A core network device, comprising at least one processor, wherein the at least one processor is configured to: be coupled to a memory, and read and execute instructions in the memory, to implement the method according to any one of claims 16 to 24.

28. A computer-readable storage medium, wherein the computer-readable storage medium stores a computer program, and when the computer program is run on a computer, the computer is enabled to perform the method according to any one of claims 1 to 24.

29. A computer program product, comprising computer program code, wherein when the computer program code is run on a computer, the computer is enabled to perform the method according to any one of claims 1 to 24.

30. A communication system, comprising the terminal device according to claim 26 and/or the core network device according to claim 27.
